# EUROPEAN PATENT APPLICATION

(11) **EP 4 804 682 A1**
(43) Date of publication of application: **09.09.2026**
(21) Application number: 23957169.8
(22) Date of filing: 31.10.2023
(51) Int. Cl.: H04W 72/20

(54) **INDICATION INFORMATION TRANSMISSION METHODS, APPARATUSES AND STORAGE MEDIUM**

(71) Applicant: Beijing Xiaomi Mobile Software Co., Ltd., Beijing 100085 (CN)
(72) Inventor: TAO, Xuhua, Beijing 100085 (CN)
(74) Representative: Stöckeler, Ferdinand
(86) International application number: PCT/CN2023/128789
(87) International publication number: WO 2025/091292

(57) **Abstract**

The present disclosure relates to indication information transmission methods, apparatuses and a storage medium. A method comprises: a terminal receiving indication information sent by a network device, wherein the network device comprises multiple transmission reception points (TRPs), and the indication information is used for indicating activation of a transmission configuration indicator (TCI) state of at least one TRP; and, on the basis of a terminal capability, determining an occasion of using the activated TCI state. In the method of the present disclosure, on the basis of indication information sent by a network device, a terminal obtains TCI states to be activated in multi-TRP scenarios, so as to activate the TCI states; for the activated TCI states, on the basis of own capability, the terminal adaptively determines occasions of using the TCI states, so that when activation completion times of a plurality of TCI states are different, the terminal can use corresponding TCI states at appropriate occasions.

## Description

### TECHNICAL FIELD

The present disclosure relates to the field of communication technologies, and in particular relates to a method for transmitting indication information, an apparatus for transmitting indication information, and a storage medium.

### BACKGROUND

In new radio (NR), spatial information for different channels and/or reference signals may be indicated by transmission configuration indicators (TCIs), and may include, for example, reception beam information or transmission beam information. The activation completion time may vary for different TCI states.

### SUMMARY

In a multiple transmission reception point (mTRP) scenario, multiple TCI states are activated, and the activation completion time may vary for different TCI states.

Embodiments of the present disclosure provide a method for transmitting indication information, an apparatus for transmitting indication information, and a storage medium.

In a first aspect, embodiments of the present disclosure provide a method for transmitting indication information, which includes: receiving, by a terminal, the indication information sent by a network device, where the network device includes multiple transmission reception points (TRPs), and the indication information indicates that a TCI state from at least one TRP is activated; and determining an application occasion of the TCI state activated according to a capability of the terminal.

In a second aspect, embodiments of the present disclosure provide a method for transmitting indication information, which includes: sending, by a network device, the indication information to a terminal, where the network device includes multiple TRPs, and the indication information indicates that a TCI state from at least one TRP is activated; and determining an application occasion of the TCI state activated according to a capability of the terminal.

In a third aspect, embodiments of the present disclosure provide a terminal, which includes: a transceiver module configured to receive indication information sent by a network device, where the network device includes multiple TRPs, and the indication information indicates that a TCI state from at least one TRP is activated; and a processing module configured to determine an application occasion of the TCI state activated according to a capability of the terminal.

In a fourth aspect, embodiments of the present disclosure provide a network device, which includes: a transceiver module configured to send indication information to a terminal, where the network device includes multiple TRPs, and the indication information indicates that a TCI state from at least one TRP is activated; and a processing module configured to determine an application occasion of the TCI state activated according to a capability of the terminal.

In a fifth aspect, embodiments of the present disclosure provide a communication device, which includes one or more processors, where the communication device is configured to perform the method according to the first aspect.

In a sixth aspect, embodiments of the present disclosure provide a communication device, which includes one or more processors, where the communication device is configured to perform the method according to the second aspect.

In a seventh aspect, embodiments of the present disclosure provide a communication system, which includes a terminal configured to implement the method according to the first aspect, and a network device configured to implement the method according to the second aspect.

In an eighth aspect, embodiments of the present disclosure provide a storage medium, which has stored therein instructions that, when run on a communication device, cause the communication device to perform the method according to the first aspect or the second aspect.

In the method in the present disclosure, the terminal obtains a TCI state to be activated in the mTRP scenario according to the indication information sent by the network device, so as to activate these TCI states. For the activated TCI state, the terminal adaptively determines an occasion when to apply the TCI state based on its own capability. Thus, when the activation completion time for multiple TCI states is different, the terminal may apply the corresponding TCI state at the appropriate occasion.

### BRIEF DESCRIPTION OF THE DRAWINGS

In order to more clearly illustrate the technical solutions in the embodiments of the present disclosure, the drawings to be used in the embodiments of the present disclosure will be described below. The following drawings are only some embodiments of the present disclosure and do not impose specific limitations on the protection scope of the present disclosure.
FIG. 1 is an illustrative schematic diagram of the architecture of a communication system provided according to an embodiment of the present disclosure.
FIG. 2a is a schematic interactive diagram of a method provided according to an embodiment of the present disclosure.
FIGS. 2b to 2c are schematic diagrams of time-domain locations for TCI state activation provided according to embodiments of the present disclosure, respectively.
FIGS. 3a to 3c are schematic flowcharts of methods performed by a terminal provided according to embodiments of the present disclosure, respectively.
FIGS. 4a to 4c are schematic flowcharts of methods performed by a network device provided according to embodiments of the present disclosure, respectively.
FIG. 5a is a schematic block diagram illustrating a terminal according to an embodiment of the present disclosure.
FIG. 5b is a schematic block diagram illustrating a network device according to an embodiment of the present disclosure.
FIG. 6a is a schematic block diagram illustrating a communication device according to an embodiment of the present disclosure.
FIG. 6b is a schematic block diagram illustrating a communication device according to an embodiment of the present disclosure.

### DETAILED DESCRIPTION

Embodiments of the present disclosure provide a method for transmitting indication information, an apparatus for transmitting indication information, and a storage medium.

In a first aspect, embodiments of the present disclosure provide a method for transmitting indication information, which includes: receiving, by a terminal, the indication information sent by a network device, where the network device includes multiple TRPs, and the indication information indicates that a TCI state from at least one TRP is activated; and determining an application occasion of the TCI state activated according to a capability of the terminal.

In the above embodiments, the terminal obtains a TCI state to be activated in the mTRP scenario according to the indication information sent by the network device, so as to activate the TCI state. For the activated TCI state, the terminal adaptively determines an occasion when to apply the TCI state based on its own capability. Thus, when the activation completion time for multiple TCI states is different, the terminal may apply the corresponding TCI state at the appropriate occasion.

In conjunction with some embodiments of the first aspect, in some embodiments, determining the application occasion of the TCI state activated according to the capability of the terminal includes: determining the application occasion of the TCI state from each TRP in the at least one TRP according to an activation delay corresponding to the TRP, where the terminal supports a capability of performing a data communication according to the corresponding TCI state after an activation of the TCI state from any TRP in the multiple TRPs is completed; or determining the application occasion of the TCI state from the at least one TRP according to a maximum value of activation delays corresponding to the at least one TRP, where the terminal does not support a capability of performing a data communication according to the corresponding TCI state after an activation of the TCI state from any TRP in the multiple TRPs is completed.

In the above embodiments, when the terminal supports the capability of applying the corresponding TCI state after the activation of the TCI state from any TRP in the multiple TRPs is completed, the terminal may determine the application occasion of the TCI state from the TRP based on the activation delay corresponding to each TRP, without waiting for the TCI states from other TRPs to be activated, thereby improving the system capacity. When the terminal does not support the above-mentioned capability, the terminal needs to determine the application occasion of the TCI state from each TRP based on the maximum value among different activation delays in order to ensure the quality of communication with the network device.

In conjunction with some embodiments of the first aspect, in some embodiments, the activation delay corresponding to any TRP in the at least one TRP is determined according to a processing time for the indication information and a processing time for a downlink (DL) reference signal (RS), where the TCI state is a DL TCI state of a known type.

In the above embodiments, when the TCI state is a DL TCI state of a known type, the terminal may determine the activation delay for the TCI state corresponding to any TRP, and thus apply the TCI state at an appropriate occasion.

In conjunction with some embodiments of the first aspect, in some embodiments, the activation delay T satisfies:
$T = n + {T}_{HARQ} + {3 N}_{slot}^{subframe , μ} + {TO}_{k} ∗ \left({T}_{first - SSB}+{T}_{SSB - proc}\right) / NR slot length ;$
where n represents a time for receiving the indication information, T_{HARQ} represents a time between the indication information and corresponding confirmation feedback information, T_{first-SSB} represents a duration between the time for receiving the indication information and a time for sending a first DL RS by the any TRP, T_{SSB-proc} is a processing time for the DL RS, and $3 {N}_{slot}^{subframe , μ}$ and TOₖ are constants.

In the above embodiments, the parameters and manners for determining the activation delay for a DL TCI state of a known type are illustrated, so that the terminal may determine the activation delay for the TCI state from the TRP accordingly.

In conjunction with some embodiments of the first aspect, in some embodiments, the activation delay corresponding to any TRP in the at least one TRP is determined according to a processing time for the indication information, a processing time for a DL RS and a beam measurement time, where the TCI state is a DL TCI state of an unknown type.

In the above embodiments, when the TCI state is a DL TCI state of an unknown type, the terminal may determine the activation delay for the TCI state corresponding to any TRP according to parameters such as a beam measurement time, and thus determine the occasion of applying the TCI state.

In conjunction with some embodiments of the first aspect, in some embodiments, the activation delay T satisfies: $\begin{matrix}T = n + {T}_{HARQ} + {3 N}_{slot}^{subframe , μ} + \left({T}_{L 1 - RSRP}+{TO}_{uk}∗\left({T}_{first - SBB}+{T}_{SBB - proc}\right)\right) / \\ NR slot length ;\end{matrix}$
where n represents a time for receiving the indication information, T_{HARQ} represents a time between the indication information and corresponding confirmation feedback information, T_{L1-RSRP} represents a time for a layer 1 reference signal received power (L1-RSRP) measurement in beam measurements, T_{first-SSB} represents a duration between the time for receiving the indication information and a time for sending a first DL RS by the any TRP, T_{SSB-proc} is a processing time for the DL RS, and $3 {N}_{slot}^{subframe , μ}$ and TOᵤₖ are constants.

In the above embodiments, the parameters and manners for determining the activation delay for a DL TCI state of an unknown type are illustrated, so that the terminal may determine the activation delay for the TCI state from the TRP accordingly.

In conjunction with some embodiments of the first aspect, in some embodiments, the activation delay corresponding to any TRP in the at least one TRP is determined according to a processing time for the indication information, a processing time for a DL RS, and an uplink (UL) path loss measurement time, where the TCI state is a UL TCI state of a known type.

In the above embodiments, when the TCI state is a UL TCI state of a known type, the terminal may determine the activation delay for the TCI state corresponding to any TRP according to parameters such as a UL path loss measurement time, and thus determine the occasion of applying the TCI state.

In conjunction with some embodiments of the first aspect, in some embodiments, the activation delay T satisfies: $T = n + {T}_{HARQ} + {3 N}_{slot}^{subframe , μ} + NM ∗ \left(\begin{matrix}{T}_{first - target - PL - RS} + 4 ∗ \\ {T}_{target - PL - RS} + 2 ms\end{matrix}\right) / NR slot length ;$
where n represents a time for receiving the indication information, T_{HARQ} represents a time between the indication information and corresponding confirmation feedback information, T_{first-target-PL-RS} represents a duration between the time for receiving the indication information and a time for receiving a first DL RS used for an UL path loss measurement, T_{target-PL-RS} represents a period for the DL RS, and $3 {N}_{slot}^{subframe , μ}$ and *NM* are constants.

In the above embodiments, the parameters and manners for determining the activation delay for a UL TCI state of a known type are illustrated, so that the terminal may determine the activation delay for the TCI state from the TRP accordingly.

In conjunction with some embodiments of the first aspect, in some embodiments, the activation delay corresponding to any TRP in the at least one TRP is determined according to a processing time for the indication information, a processing time for a DL RS, a UL path loss measurement time, and a beam measurement time, where the TCI state is a UL TCI state of an unknown type.

In the above embodiments, when the TCI state is a UL TCI state of an unknown type, the terminal may determine the activation delay for the TCI state corresponding to any TRP according to parameters such as a UL path loss measurement time and a beam measurement time, and thus determine the occasion of applying the TCI state.

In conjunction with some embodiments of the first aspect, in some embodiments, the activation delay T satisfies: $T = n + {T}_{HARQ} + {3 N}_{slot}^{subframe , μ} + \left(\begin{matrix}{T}_{L 1 - RSRP} + {T}_{first - target - PL - RS} + 4 ∗ \\ {T}_{target - PL - RS} + 2 ms\end{matrix}\right) / NR slot length ;$
where n represents a time for receiving the indication information, T_{HARQ} represents a time between the indication information and corresponding confirmation feedback information, T_{L1-RSRP} represents a time for an L1-RSRP measurement in beam measurements, T_{first-target-PL-RS} represents a duration between the time for receiving the indication information and a time for receiving a first DL RS used for an UL path loss measurement, T_{target-PL-RS} represents a period for the DL RS, and $3 {N}_{slot}^{subframe , μ}$ is a constant.

In the above embodiments, the parameters and manners for determining the activation delay for a UL TCI state of an unknown type are illustrated, so that the terminal may determine the activation delay for the TCI state from the TRP accordingly.

In conjunction with some embodiments of the first aspect, in some embodiments, after the terminal receives the indication information, the TCI state applied before the indication information continues to be applied before a time *t,* where *t* satisfies:
$t = n + {T}_{HARQ} + {3 N}_{slot}^{subframe , μ} ;$
where n represents a time for receiving the indication information, T_{HARQ} represents a time between the indication information and corresponding confirmation feedback information, and $3 {N}_{slot}^{subframe , μ}$ is a constant.

In the above embodiments, after receiving the indication information and when the activation of the new TCI state indicated by the indication information has not been completed, the terminal may apply the original TCI state or the old TCI state to maintain data communication with the network device.

In conjunction with some embodiments of the first aspect, in some embodiments, the multiple TRPs include a first TRP and a second TRP, and the method further includes: performing, by the terminal, a data communication with the first TRP according to the TCI state activated during a first time period excluding a second time period, where the first time period is a time period between a completion of an activation of the TCI state from the first TRP and a completion of an activation of the TCI state from the second TRP, and the second time period is a time period during which an RS appears during an activation process of the TCI state from the second TRP, where the terminal supports a capability of performing the data communication according to the corresponding TCI state after an activation of the TCI state from any TRP in the multiple TRPs is completed.

In the above embodiments, for a terminal that supports the capability of applying the corresponding TCI state after the activation of the TCI state from any TRP in multiple TRPs is completed, the terminal may receive the scheduling by the first TRP after the activation of the TCI state from the first TRP is completed. However, during the RS transmission period related to the activation of the TCI states from other TRPs, the terminal does not expect the first TRP to perform data scheduling in order to ensure the activation process of the TCI states from other TRPs.

In conjunction with some embodiments of the first aspect, in some embodiments, the second time period includes one of: a time-domain unit where the RS is located during the activation process of the TCI state from the second TRP, where a round-trip-delay (RTD) is less than or equal to a cyclic prefix (CP), and the RTD is a delay between an RS for an activation of the TCI state from the first TRP and an RS for an activation of the TCI state from the second TRP; or the time-domain unit and a time-domain unit before or after the time-domain unit, where an RTD is greater than a CP.

In the above embodiments, depending on the relationship between the RS transmission delay and the CP of different TRPs, the second time period during which the terminal does not expect to be scheduled may be one or more time-domain units to meet the duration requirements of the terminal to perform the TCI state activation.

In conjunction with some embodiments of the first aspect, in some embodiments, a behavior of the terminal during the application occasion includes one of: receiving a physical downlink control channel (PDCCH) or a physical downlink shared channel (PDSCH) according to the TCI state activated, or sending a physical uplink shared channel (PUSCH) according to the TCI state activated.

In the above embodiments, based on the activated TCI state, the terminal may receive a downlink channel sent by the network device or send an uplink channel to the network device, so that the network device may perform a data communication in a reasonable manner.

In conjunction with some embodiments of the first aspect, in some embodiments, the method further includes: sending, by the terminal, capability information to the network device, where the capability information indicates the capability of the terminal.

In the above embodiments, the terminal may report its own capability to the network device by sending capability information, so that the network device may determine whether the terminal supports the capability of applying the corresponding TCI state after the activation of the TCI state from any TRP in multiple TRPs is completed, so as to make reasonable scheduling according to the capability of the terminal.

In a second aspect, embodiments of the present disclosure provide a method for transmitting indication information, which includes: sending, by a network device, the indication information to a terminal, where the network device includes multiple TRPs, and the indication information indicates that a TCI state from at least one TRP is activated; and determining an application occasion of the TCI state activated according to a capability of the terminal.

In conjunction with some embodiments of the second aspect, in some embodiments, determining the application occasion of the TCI state activated according to the capability of the terminal includes: determining the application occasion of the TCI state from each TRP in the at least one TRP according to an activation delay corresponding to the TRP, where the terminal supports a capability of performing a data communication according to the corresponding TCI state after an activation of the TCI state from any TRP in the multiple TRPs is completed; or determining the application occasion of the TCI state from the at least one TRP according to a maximum value of activation delays corresponding to the at least one TRP, where the terminal does not support a capability of performing a data communication according to the corresponding TCI state after an activation of the TCI state from any TRP in the multiple TRPs is completed.

In conjunction with some embodiments of the second aspect, in some embodiments, the activation delay corresponding to any TRP in the at least one TRP is determined according to a processing time for the indication information and a processing time for a DL RS, where the TCI state is a DL TCI state of a known type.

In conjunction with some embodiments of the second aspect, in some embodiments, the activation delay T satisfies:
$T = n + {T}_{HARQ} + {3 N}_{slot}^{subframe , μ} + {TO}_{k} ∗ \left({T}_{first - SSB}+{T}_{SBB - proc}\right) / NR slot length ;$
where n represents a time for receiving the indication information, T_{HARQ} represents a time between the indication information and corresponding confirmation feedback information, T_{first-SSB} represents a duration between the time for receiving the indication information and a time for sending a first DL RS by the any TRP, T_{SSB-proc} is a processing time for the DL RS, and $3 {N}_{slot}^{subframe , μ}$ and TOₖ are constants.

In conjunction with some embodiments of the second aspect, in some embodiments, the activation delay corresponding to any TRP in the at least one TRP is determined according to a processing time for the indication information, a processing time for a DL RS and a beam measurement time, where the TCI state is a DL TCI state of an unknown type.

In conjunction with some embodiments of the second aspect, in some embodiments, the activation delay T satisfies: $\begin{matrix}T = n + {T}_{HARQ} + 3 {N}_{slot}^{subframe , μ} + \left({T}_{L 1 - RSRP}+{TO}_{uk}∗\left({T}_{first - SSB}+{T}_{SSB - proc}\right)\right) / \\ NR slot length ;\end{matrix}$
where n represents a time for receiving the indication information, T_{HARQ} represents a time between the indication information and corresponding confirmation feedback information, T_{L1-RSRP} represents a time for an L1-RSRP measurement in beam measurements, T_{first-SSB} represents a duration between the time for receiving the indication information and a time for sending a first DL RS by the any TRP, T_{SSB-proc} is a processing time for the DL RS, and ${3 N}_{slot}^{subframe , μ}$ and TOᵤₖ are constants.

In conjunction with some embodiments of the second aspect, in some embodiments, the activation delay corresponding to any TRP in the at least one TRP is determined according to a processing time for the indication information, a processing time for a DL RS, and a UL path loss measurement time, where the TCI state is a UL TCI state of a known type.

In conjunction with some embodiments of the second aspect, in some embodiments, the activation delay T satisfies: $T = n + {T}_{HARQ} + 3 {N}_{slot}^{subframe , μ} + NM ∗ \left(\begin{matrix}{T}_{first - target - PL - RS} + 4 ∗ \\ {T}_{target - PL - RS} + 2 ms\end{matrix}\right) / NR slot length ;$
where n represents a time for receiving the indication information, T_{HARQ} represents a time between the indication information and corresponding confirmation feedback information, T_{first-target-PL-RS} represents a duration between the time for receiving the indication information and a time for receiving a first DL RS used for an UL path loss measurement, T_{target-PL-RS} represents a period for the DL RS, and ${3 N}_{slot}^{subframe , μ}$ and *NM* are constants.

In conjunction with some embodiments of the second aspect, in some embodiments, the activation delay corresponding to any TRP in the at least one TRP is determined according to a processing time for the indication information, a processing time for a DL RS, a UL path loss measurement time, and a beam measurement time, where the TCI state is a UL TCI state of an unknown type.

In conjunction with some embodiments of the second aspect, in some embodiments, the activation delay T satisfies: $T = n + {T}_{HARQ} + 3 {N}_{slot}^{subframe , μ} + \left(\begin{matrix}{T}_{L 1 - RSRP} + {T}_{first - target - PL - RS} + 4 ∗ \\ {T}_{target - PL - RS} + 2 ms\end{matrix}\right) / NR slot length ;$
where n represents a time for receiving the indication information, T_{HARQ} represents a time between the indication information and corresponding confirmation feedback information, T_{L1-RSRP} represents a time for an L1-RSRP measurement in beam measurements, T_{first-target-PL-RS} represents a duration between the time for receiving the indication information and a time for receiving a first DL RS used for an UL path loss measurement, T_{target-PL-RS} represents a period for the DL RS, and ${3 N}_{slot}^{subframe , μ}$ is a constant.

In conjunction with some embodiments of the second aspect, in some embodiments, after the terminal receives the indication information, the TCI state applied before the indication information continues to be applied before a time *t,* where *t* satisfies:
$t = n + {T}_{HARQ} + 3 {N}_{slot}^{subframe , μ} ;$
where n represents a time for receiving the indication information, T_{HARQ} represents a time between the indication information and corresponding confirmation feedback information, and ${3 N}_{slot}^{subframe , μ}$ is a constant.

In conjunction with some embodiments of the second aspect, in some embodiments, the multiple TRPs include a first TRP and a second TRP, and the method further includes: performing, by the terminal, a data communication with the first TRP according to the TCI state activated during a first time period excluding a second time period, where the first time period is a time period between a completion of an activation of the TCI state from the first TRP and a completion of an activation of the TCI state from the second TRP, and the second time period is a time period during which an RS appears during an activation process of the TCI state from the second TRP, where the terminal supports a capability of performing the data communication according to the corresponding TCI state after an activation of the TCI state from any TRP in the multiple TRPs is completed.

In conjunction with some embodiments of the second aspect, in some embodiments, the second time period includes one of: a time-domain unit where the RS is located during the activation process of the TCI state from the second TRP, where an RTD is less than or equal to a CP, and the RTD is a delay between an RS for an activation of the TCI state from the first TRP and an RS for an activation of the TCI state from the second TRP; or the time-domain unit and a time-domain unit before or after the time-domain unit, where an RTD is greater than a CP.

In conjunction with some embodiments of the second aspect, in some embodiments, a behavior of the network device during the application occasion includes one of: sending a PDCCH or a PDSCH according to the TCI state activated, or receiving a PUSCH according to the TCI state activated.

In conjunction with some embodiments of the second aspect, in some embodiments, the method further includes: receiving, by the network device, capability information sent by the terminal, where the capability information indicates the capability of the terminal.

In a third aspect, embodiments of the present disclosure provide a terminal, which includes: a transceiver module configured to receive indication information sent by a network device, where the network device includes multiple TRPs, and the indication information indicates that a TCI state from at least one TRP is activated; and a processing module configured to determine an application occasion of the TCI state activated according to a capability of the terminal.

In a fourth aspect, embodiments of the present disclosure provide a network device, which includes: a transceiver module configured to send indication information to a terminal, where the network device includes multiple TRPs, and the indication information indicates that a TCI state from at least one TRP is activated; and a processing module configured to determine an application occasion of the TCI state activated according to a capability of the terminal.

In a fifth aspect, embodiments of the present disclosure provide a communication device, which includes one or more processors, where the communication device is configured to perform the method according to the first aspect.

In a sixth aspect, embodiments of the present disclosure provide a communication device, which includes one or more processors, where the communication device is configured to perform the method according to the second aspect.

In a seventh aspect, embodiments of the present disclosure provide a communication system, which includes a terminal configured to implement the method according to the first aspect, and a network device configured to implement the method according to the second aspect.

In an eighth aspect, embodiments of the present disclosure provide a storage medium, which has stored therein instructions that, when run on a communication device, cause the communication device to perform the method according to the first aspect or the second aspect.

In a ninth aspect, embodiments of the present disclosure provide a program product that, when executed by a communication device, causes the communication device to perform the methods described in an optional implementation of the first aspect and an optional implementation of the second aspect.

In a tenth aspect, embodiments of the present disclosure provide a computer program that, when run on a computer, causes the computer to perform the methods described in an optional implementation of the first aspect and an optional implementation of the second aspect.

In an eleventh aspect, embodiments of the present disclosure provide a chip or chip system. The chip or chip system includes a processing circuitry configured to perform the methods described in an optional implementation of the first aspect and an optional implementation of the second aspect.

It may be understood that the terminal, the network device, the communication system, the storage medium, the program product, the computer program, and the chip or chip system which are mentioned above are all configured to execute the methods provided in the embodiments of the present disclosure. Therefore, regarding the beneficial effects they may achieve, reference may be made to the beneficial effects of the corresponding methods, which will not be repeated here.

The embodiments of the present disclosure are not exhaustive, but are merely illustrative of some embodiments, and are not intended to limit the scope of protection of the present disclosure. Unless there is any contradiction, each step in a particular embodiment may be implemented as an independent embodiment, and the steps may be arbitrarily combined. For example, the solution after removing some steps in a particular embodiment may also be implemented as an independent embodiment, and the order of the steps in a particular embodiment may be arbitrarily interchanged. In addition, optional implementations in a particular embodiment may be arbitrarily combined. Furthermore, the embodiments may be arbitrarily combined. For example, some or all steps in different embodiments may be arbitrarily combined, and a particular embodiment may be arbitrarily combined with optional implementations of other embodiments.

In each embodiment of the present disclosure, unless otherwise specified or contradicted by logic, the terms and/or descriptions between the embodiments are consistent and may be referenced by each other. The technical features in different embodiments may be combined based on their inherent logical relationships to form a new embodiment.

The terms used in the embodiments of the present disclosure are only for the purpose of describing specific embodiments and are not intended to limit the present disclosure.

In the embodiments of the present disclosure, unless otherwise specified, elements expressed in the singular form, such as "a," "an," "the," "above," "said," "above-mentioned," "this," or the like, may mean "one and only one," "one or more," "at least one," or the like. For example, when an article such as "a," "an," and "the" in English in translation is used, the noun following the article may be understood as a singular expression or a plural expression.

In the embodiments of the present disclosure, "a plurality of" refers to two or more.

In some embodiments, terms such as "at least one of," "one or more," "a plurality of," "multiple," and the like may be used interchangeably.

In some embodiments, the descriptions such as "at least one of A or B," "A and/or B," "A in one case, B in another case" or "in response to one case A, in response to another case B" may include the following technical solutions depending on the situations: A is executed in some embodiments (A is executed independently from B); B is executed in some embodiments (B is executed independently from A); A or B is selected for execution in some embodiments (A and B are selectively executed); and A and B are executed in some embodiments (A and B are both executed). The same applies when there are more branches such as A, B, and C.

In some embodiments, the descriptions such as "A or B" may include the following technical solutions depending on the situations: A is executed in some embodiments (A is executed independently from B); B is executed in some embodiments (B is executed independently from A); and A or B is selected for execution in some embodiments (A and B are selectively executed). The same applies when there are more branches such as A, B, and C.

The prefixes such as "first" and "second" in the embodiments of the present disclosure are only used to distinguish different described objects and do not constitute any restrictions on the position, order, priority, quantity or content of the described objects. For the statement of the described objects, reference is made to the description in the context of the claims or embodiments, and no unnecessary restrictions should be constituted due to the use of prefixes. For example, if the described object is a "field", the ordinal numbers preceding the "fields" in a "first field" and a "second field" do not limit the position or order of the "fields". "First" and "second" do not limit whether the "fields" they modify are in the same message, nor do they limit the order of the "first field" and "second field". For another example, if the described object is "level", then the ordinal numbers preceding the "levels" in a "first level" and a "second level" do not restrict the priority between "levels". For another example, the number of the described objects is not limited by ordinal numbers and may be one or more. Taking a "first device" as an example, the number of "devices" may be one or more. In addition, the objects modified by different prefixes may be the same or different. For example, if the described object is a "device", then the "first device" and the "second device" may be the same device or different devices, and the types of the "first device" and the "second device" may be the same or different; for another example, if the described object is "information", then "first information" and "second information" may be the same information or different information, and the contents of the "first information" and the "second information" may be the same or different.

In some embodiments, "including A," "comprising A," "indicating A," and "carrying A" may be interpreted as directly carrying A or indirectly indicating A.

In some embodiments, terms such as "time/frequency" and "time-frequency domain" refer to a time domain and/or a frequency domain.

In some embodiments, terms such as "in response to...," "in response to determining...," "in the case of...," "at the time of...," "when...," "if...," "in a case where...," and the like may be used interchangeably.

In some embodiments, terms such as "greater than," "greater than or equal to," "not less than," "more than," "more than or equal to," "not smaller than," "higher than," "higher than or equal to," "not lower than," and "above" may be used interchangeably; and terms such as "less than," "less than or equal to," "not greater than," "smaller than," "smaller than or equal to," "not more than," "lower than," "lower than or equal to," "not higher than," and "below" may be used interchangeably.

In some embodiments, apparatuses and devices may be interpreted as being physical or virtual, and their names are not limited to the names described in the embodiments. In some cases, apparatuses and devices may also be understood as "equipments," "devices," "circuits," "network elements," "nodes," "functions," "units," "sections," "systems," "networks," "chips," "chip systems," "entities," and "bodies".

In some embodiments, the "network" may be interpreted as devices included in the network, e.g., an access network device, a core network device, or the like.

In some embodiments, in some embodiments, terms such as "access network device (AN device)," "radio access network device (RAN device)," "base station (BS)," "radio base station," "fixed station," "node," "access point," "transmission point (TP)," "reception point (RP)," "transmission/reception point (TRP)," "panel," "antenna panel," "antenna array," "cell," "macro cell," "small cell," "femto cell," "pico cell," "sector," "cell group," "serving cell," "carrier," "component carrier," and "bandwidth part (BWP)" may be used interchangeably.

In some embodiments, terms such as terminal, terminal device, user equipment (UE), user terminal, mobile station (MS), mobile terminal (MT), subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, and client may be used interchangeably.

In some embodiments, an access network device, a core network device, or a network device may be replaced by a terminal. For example, the various embodiments of the present disclosure may also be applied to a structure in which the communication between a terminal and an access network device, a core network device, or a network device is replaced by the communication between multiple terminals (for example, device-to-device (D2D) communication, vehicle-to-everything (V2X) communication, or the like). In this case, the terminal may be configured to have all or some of the functions of the access network device. Furthermore, the words such as "uplink" and "downlink" may be replaced with words corresponding to an inter-terminal communication (e.g., "side"). For example, an uplink channel, a downlink channel, and the like may be replaced by a side channel, and an uplink, a downlink, and the like may be replaced by a side link.

In some embodiments, the terminal may be replaced by an access network device, a core network device, or a network device. In this case, the access network device, the core network device, or the network device may also be configured to have all or some of the functions of the terminal.

In some embodiments, obtaining data, information, and the like may comply with the laws and regulations of the country where the data, information, and the like are obtained.

In some embodiments, data, information, and the like may be obtained with the consent of the user.

In addition, each element, each row, or each column in the table in the embodiments of the present disclosure may be implemented as an independent embodiment, and the combination of any elements, any rows, and any columns may also be implemented as an independent embodiment.

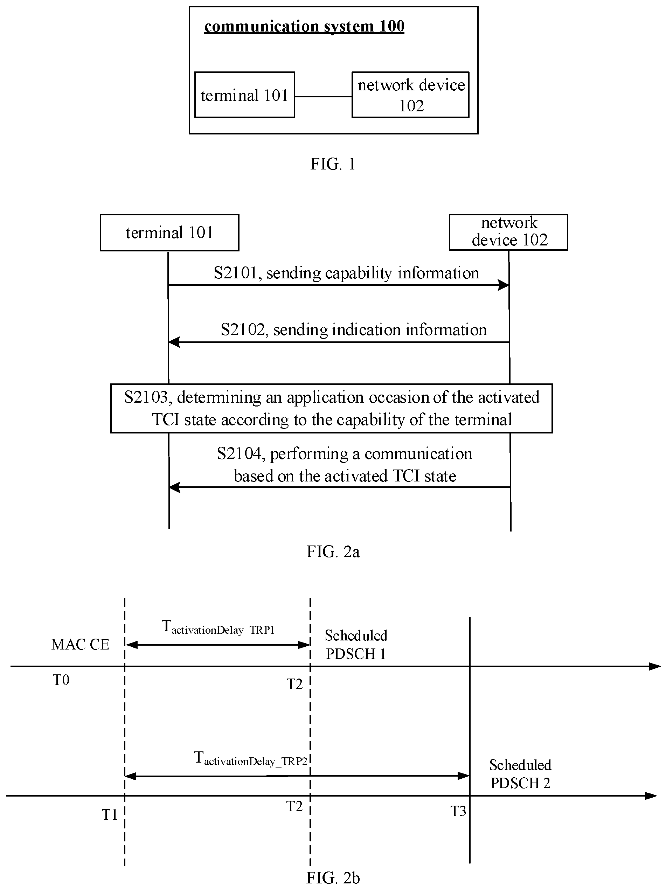

FIG. 1 is a schematic diagram illustrating the architecture of a communication system according to an embodiment of the present disclosure.

As shown in FIG. 1, the communication system 100 may include a terminal 101 and a network device 102.

In some embodiments, for example, the terminal 101 includes, but is not limited to, at least one of: a mobile phone, a wearable device, an Internet of Things device, a car with a communication function, a smart car, a tablet computer (Pad), a computer with a wireless transceiver function, a virtual reality (VR) terminal, an augmented reality (AR) terminal, a wireless terminal in industrial control, a wireless terminal in self-driving, a wireless terminal in a remote medical surgery, a wireless terminal in smart grid, a wireless terminal in transportation safety, a wireless terminal in a smart city, or a wireless terminal in a smart home.

In some embodiments, the network device 102 may include at least one of an access network device or a core network device.

In some embodiments, the access network device is, for example, a node or device that connects the terminal to a wireless network. The access network device may include, but is not limited to, at least one of: an evolved Node B (eNB), a next generation eNB (ng-eNB), a next generation Node B (gNB), a node B (NB), a home node B (HNB), a home evolved node B (HeNB), a wireless backhaul device, a radio network controller (RNC), a base station controller (BSC), a base transceiver station (BTS), a base band unit (BBU), or a mobile switching center in a 5G communication system; a base station, an open radio access network (Open RAN), or a cloud RAN (Cloud RAN) in a 6G communication system; base stations in other communication systems; or an access node in a wireless fidelity (Wi-Fi) system.

In some embodiments, the technical solutions in the present disclosure may be applied to the Open RAN architecture. In this case, the interfaces between or within access network devices involved in the embodiments of the present disclosure may be transformed into internal interfaces of the Open RAN architecture. The processes and information interactions between these internal interfaces may be implemented by software or programs.

In some embodiments, the access network device may be composed of a centralized unit (CU) and a distributed unit (DU), in which the CU may also be referred to as a control unit. The CU-DU structure may be used to split the protocol layers of the access network device, and the functions of some protocol layers are placed in the CU for centralized control, and the functions of some or all of the remaining protocol layers are distributed in the DU, and the DU is centrally controlled by the CU.

In some embodiments, the core network device may be a single device including one or more network functions, or may be multiple devices or a group of devices, each including all or some of the one or more network functions. The network functions may be virtual or physical. The core network includes, for example, at least one of an evolved packet core (EPC), a 5G core network (5GCN), or a next generation core (NGC).

It may be understood that the communication system described in the embodiments of the present disclosure is for the purpose of more clearly illustrating the technical solution in the embodiments of the present disclosure, but does not constitute a limitation on the technical solution provided in the embodiments of the present disclosure. Those of ordinary skill in the art may know that with the evolution of the system architecture and the emergence of new service scenarios, the technical solution provided in the embodiments of the present disclosure is also applicable to similar technical problems.

The following embodiments of the present disclosure may be applied to the communication system 100 shown in FIG. 1, or to some entities thereof, but are not limited thereto. The entities shown in FIG. 1 are illustrative. The communication system 100 may include all or some of the entities in FIG. 1, or the communication system may include other entities outside in FIG. 1. The number and form of individual entities are arbitrary. The connection relationship between the entities is illustrative. The entities may not be connected to each other, or may be connected to each other in any way. The connection may be direct or indirect, and may be wired or wireless.

The embodiments of the present disclosure may be applied to long term evolution (LTE) systems, LTE-advanced (LTE-A) systems, LTE-beyond (LTE-B) systems, SUPER 3G systems, international mobile telecommunications-advanced (IMT-Advanced) systems, 4G mobile communication systems, 5G mobile communication systems, 5G new radio (NR) systems, future radio access (FRA) systems, new-radio access technology (RAT) systems, new radio (NR) systems, new radio access (NX) systems, future generation radio access (FX) systems, global system for mobile communications (GSM), CDMA2000, ultra mobile broadband (UMB) systems, IEEE 802.11 (Wi-Fi), IEEE 802.16 (WiMAX), IEEE 802.20, ultra-wideband (UWB), Bluetooth (a registered trademark), PLMN networks, D2D systems, machine-to-machine (M2M) systems, IoT systems, V2X systems, systems utilizing other communication methods, next-generation systems built upon them, and the like. In addition, multiple systems may also be combined (for example, a combination of 5G and LTE or LTE-A, or the like) for application.

In an embodiment of the present disclosure, in the mTRP scenario, the network device 102 includes multiple TRPs.

In the embodiments of the present disclosure, different TCI states from TRPs are activated in the mTRP scenario. The activation completion time for different TCI states is different, and the behavior of the terminal in this scenario needs to be defined.

FIG. 2a is a schematic interactive diagram illustrating a method for transmitting indication information according to an embodiment of the present disclosure. As shown in FIG. 2a, embodiments of the present disclosure relate to a method for transmitting indication information, and the above method includes the following steps.

At step S2101, the terminal 101 sends capability information to the network device 102.

In some embodiments, the capability information indicates a capability of the terminal.

Optionally, the capability of the terminal includes whether the terminal supports the capability of applying the corresponding TCI state after the activation of the TCI state from any TRP in the multiple TRPs is completed, or this capability is simply referred to as an advanced capability (more advanced implementation capability). The capability information indicates whether the terminal 101 supports this advanced capability.

Optionally, if the terminal 101 supports the above-mentioned advanced capability, after the activation of the TCI state from a TRP is completed in the mTRP scenario, data communication may be performed based on the TCI state, for example, being scheduled by the TRP, without waiting for the completion of the activation of the TCI states from other TRPs.

Optionally, if the terminal 101 does not support the above-mentioned advanced capability, in the mTRP scenario, the terminal 101 needs to complete the activation of the TCI states from all TRPs that need to be activated before receiving the scheduling by the corresponding TRP.

In some embodiments, the network device 102 receives the capability information.

At step S2102, the network device 102 sends indication information to the terminal 101.

In some embodiments, the indication information indicates that the TCI state from at least one TRP is activated.

Optionally, the activated TCI state indicated in the indication information may be recorded as a target TCI state or a new TCI state. A TCI state applied before the target TCI state or the currently applied TCI state may be referred to as an original TCI state or an old TCI state.

Optionally, beams in downlink and/or uplink channels may be updated via the target TCI state in the indication information.

Optionally, in the mTRP scenario, the network device 102 that sends the indication information may be any TRP.

In some embodiments, the indication information may be sent via a media access control-control element (MAC CE).

In an example, the network device 102 may indicate that the unified TCI state from multiple TRPs is activated via a single piece of indication information such as an MAC CE. For example, the mTRP includes a first TRP (or referred to as TRP1) and a second TRP (or referred to as TRP2). The network device 102 indicates that two TCI states, namely the TCI state from TRP1 and the TCI state from TRP2, are activated by sending an MAC CE.

In another example, the network device 102 may indicate that the unified TCI state from a TRP is activated via an MAC CE, and may activate the unified TCI state from multiple TRPs via multiple indication information such as an MAC CE. For example, the mTRP includes TRP1 and TRP2. The network device 102 indicates that the TCI state from TRP1 is activated via an MAC CE and the TCI state from TRP2 is activated via another MAC CE.

In some embodiments, before sending the indication information such as an MAC CE, the network device 102 may configure a TCI state list for the terminal 101 via a radio resource control (RRC).

In some embodiments, the terminal 101 receives the indication information.

At step S2103, an application occasion of the activated TCI state is determined according to the capability of the terminal.

In some embodiments, for example, the capability of the terminal may include whether the above-mentioned advanced capability is supported.

In some embodiments, the application occasion may refer to the occasion when the terminal 101 performs a data communication based on the activated TCI state, or the occasion when the network device 102 performs scheduling based on the activated TCI state. The application occasion may be a time, a duration, or a time period.

In some embodiments, after receiving the indication information, the terminal 101 completes the activation of the TCI state after an activation delay corresponding to the TCI state in the indication information. After the activation of the TCI state is completed, the terminal 101 may perform a data communication based on the activated TCI state, or in other words, apply the TCI state, for example, receive a downlink channel with the activated TCI state.

In some embodiments, step S2103 may include one of the following examples.

In an example, the terminal 101 determines the application occasion of the TCI state from a corresponding TRP based on the activation delay corresponding to each TRP in at least one TRP. The terminal supports the capability of performing a data communication according to the corresponding TCI state after the activation of the TCI state from any TRP in multiple TRPs is completed.

In this example, if the terminal 101 supports the above-mentioned advanced capability, the terminal 101 may perform a data communication based on the TCI state after completing the activation of the TCI state from any TRP. Referring to FIG. 2b, the mTRP includes TRP1 and TRP2. The terminal 101 receives an MAC CE at time T0, where the MAC CE indicates the activation of the TCI state from TRP1 and the TCI state from TRP2. The activation delay corresponding to TRP1, that is, the activation delay for the TCI state from TRP1, includes T_{activationDelay_TRP1}. If the activation delay corresponding to TRP1 is a time period (T0 to T2), the terminal 101 completes the activation of the TCI state from TRP1 at time T2. The activation delay corresponding to TRP2, that is, the activation delay for the TCI state from TRP2, includes T_{activationDelay_TRP2}. If the activation delay corresponding to TRP2 is a time period (T0 to T3), the terminal 101 completes the activation of the TCI state from TRP2 at time T3.

In this example, for the terminal 101 that supports the above-mentioned advanced capability, the terminal 101 may determine the start time of the application occasion of the TCI state from TRP1 as T2, and determine the start time of the application occasion of the TCI state from TRP2 as T3. For example, starting from T2, the terminal 101 receives a PDSCH or PDCCH scheduled by TRP1, with PDSCH1 as an example in the drawing; and starting from T3, the terminal 101 receives a PDSCH or PDCCH scheduled by TRP2, with PDSCH2 as an example in the drawing.

In another example, the terminal 101 determines the application occasion of the TCI state from at least one TRP based on a maximum value of the activation delays corresponding to at least one TRP, where the terminal does not support the capability of performing a data communication based on the corresponding TCI state after the activation of the TCI state from any TRP in the multiple TRPs is completed.

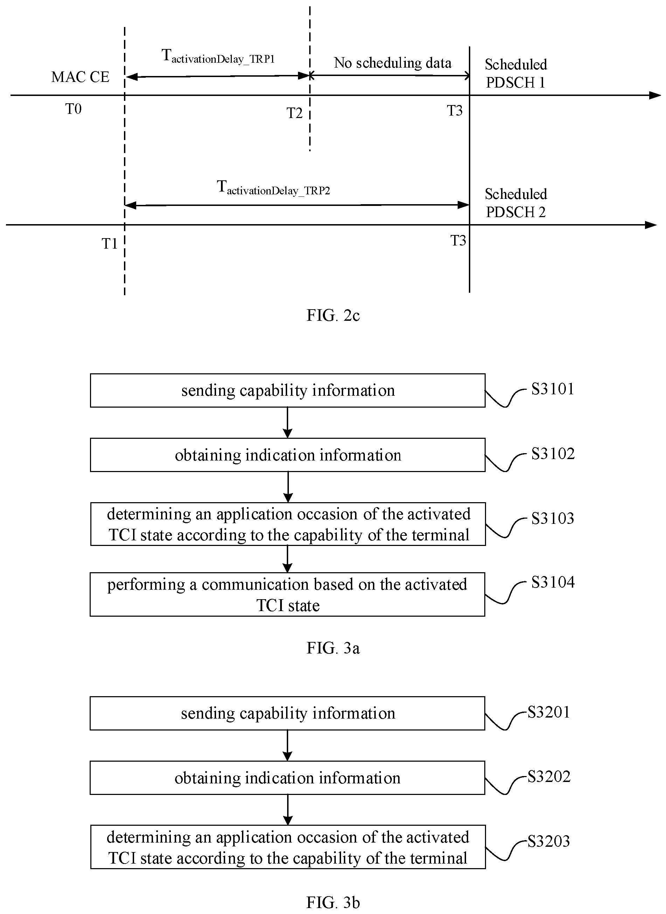

In this example, if the terminal 101 does not support the above-mentioned advanced capability, a data communication is performed based on the TCI state after the activation of TCI states from all TRPs to be activated is completed. Referring to FIG. 2c, the mTRP includes TRP1 and TRP2. The terminal 101 receives an MAC CE at time T0, where the MAC CE indicates the activation of the TCI state from TRP1 and the TCI state from TRP2. If the activation delay corresponding to TRP1 is a time period (T0 to T2), the terminal 101 completes the activation of the TCI state from TRP1 at time T2. If the activation delay corresponding to TRP2 is a time period (T0 to T3), the terminal 101 completes the activation of the TCI state from TRP2 at time T3.

In this example, for the terminal 101 that does not support the above-mentioned advanced capability, the terminal 101 may determine that the start time of the application occasions for both TCI states is T3. For example, starting from T3, the terminal 101 receives PDSCH1 scheduled by TRP1, and starting from T3, the terminal 101 receives PDSCH2 scheduled by TRP2.

In some embodiments, when the application occasion is determined, the activation delay for each TCI state needs to be known. The activation delay corresponding to the TCI state varies depending on the type of the TCI state.

Optionally, the unified TCI state includes a known type (or simply known) and an unknown type (or simply unknown).

Optionally, the unified TCI state may be a DL TCI state and/or a UL TCI state.

Optionally, during the activation process of different types of TCI states, the terminal 101 performs different operations based on the corresponding downlink RSs, and the corresponding activation delay is different.

In some embodiments, each DL TCI state may be determined as a known type based on the following conditions. The DL TCI state is known if the following conditions are met.
(1) Within the defined time period, the following conditions are met.

A DL TCI state activation or switching command (such as indication information) is received within 1280 ms upon the last transmission of the RS resource for a beam measurement.

The terminal 101 has sent at least one layer reference signal received power (L1-RSRP) report for the target DL TCI state before the indication information.

The target DL TCI state remains detectable during the DL TCI state activation or switching period.

An RS associated with the DL TCI state, such as a synchronization signal/physical broadcast channel block (SSB) associated with the DL TCI state, remains detectable during the DL TCI state activation or switching period, where the signal to interference plus noise ratio (SNR) corresponding to the DL TCI state ≥ -3dB, and the SSB may be associated with either a physical cell identifier (PCI) of a serving cell or a PCI different from the PCI of the serving cell.

The defined time period begins at the time for the last transmission of the RS resource used for the L1-RSRP measurement reporting for the target DL TCI state, and ends at the time for the completion of the activation of the DL TCI state, where the RS resource for the L1-RSRP measurement is an RS in the target DL TCI state or an RS quasi-co-located (QCLed or QCL) with the target DL TCI state.

(2) If (1) is not met, the DL TCI state is unknown.

In some embodiments, each UL TCI state may be determined as a known type based on the following conditions. The UL TCI state is known if the following conditions are met.
(1) Within the defined time period, the following conditions are met.

A UL TCI state activation or switching command (such as indication information) is received within 1280 ms upon the last transmission of the RS resource for a beam measurement.

The terminal 101 has sent at least one L1-RSRP report for the target UL TCI state before the indication information.

The RS configured in the target UL TCI state remains detectable during the UL TCI state activation or switching period, where the SNR corresponding to the RS configured in the target UL TCI state ≥ -3dB.

The target UL TCI state remains detectable during the UL TCI state activation or switching period.

The SSB associated with the UL TCI state remains detectable during the UL TCI state activation or switching period, where the SNR corresponding to the UL TCI state ≥ -3dB, and the SSB may be associated with either a PCI of a serving cell or a PCI different from the PCI of the serving cell.

The defined time period begins at the time for the last transmission of the RS resource used for the L1-RSRP measurement reporting for the target UL TCI state, and ends at the time for the completion of the activation of the UL TCI state, where the RS resource for the L1-RSRP measurement is an RS in the target DL TCI state or an RS QCLed with the target DL TCI state.

(2) If (1) is not met, the UL TCI state is unknown.

In some embodiments, depending on the conditions of the known types described above, the TCI states pair configured by the network device 102 may have the following different combinations:
(1) a known TCI state and a known TCI state;
(2) a known TCI state and an unknown TCI state;
(3) an unknown TCI state and an unknown TCI state.

Taking the mTRP including TRP1 and TRP2 as an example, the TCI states in the above TCI states pair may correspond to TRP1 and TRP2, respectively. In each combination, the terminal 101 may determine the application occasions corresponding to the two TCI states based on the capability of the terminal.

Optionally, the terminal 101 may determine the activation delay for the TCI state corresponding to each TRP according to the following examples.

In a first example, the activation delay corresponding to any TRP in the at least one TRP is determined according to a processing time for the indication information and a processing time for a DL RS, where the TCI state is a DL TCI state of a known type.

Optionally, for example, the processing time for the indication information includes the processing time for the demodulation of the MAC CE and the like.

Optionally, the MAC CE may be carried in the PDSCH.

Optionally, when the TCI state is a known DL TCI state, the terminal 101 performs time/frequency tracking during the activation process.

Optionally, the RS may be an SSB.

Optionally, the activation delay T satisfies
$T = n + {T}_{HARQ} + {3 N}_{slot}^{subframe , μ} + {TO}_{k} ∗ \left({T}_{first - SSB}+{T}_{SSB - proc}\right) / NR slot length ;$
where n represents a time for receiving the indication information, T_{HARQ} represents a time between the indication information and corresponding confirmation feedback information, T_{first-SSB} represents a duration between the time for receiving the indication information and a time for sending a first DL RS by the any TRP, T_{SSB-proc} is a processing time for the DL RS, and $3 {N}_{slot}^{subframe , μ}$ and TOₖ are constants.

It should be noted that during the process of determining the activation delay corresponding to any TRP, the indication information is indication information that indicated that the TCI state from the TRP is activated, and the downlink RS is an RS sent by the TRP to activate its own TCI state. Regarding the following embodiments, reference may be made to this description.

Optionally, the above-mentioned time may be a slot.

Optionally, if the target TCI state is not on the list of active TCI states corresponding to the downlink channel, TOₖ = 1; otherwise, TOₖ = 0.

Optionally, T_{SSB-proc} = 2ms.

Optionally, the application occasion of the TCI state is after *T.* For example, after receiving the indication information, the terminal 101 completes the activation or switching of the TCI state in a first slot after *T*, that is, switching from an old TCI state to a target TCI state, and may apply the target TCI state, for example, receive the downlink channel PDSCH or PDCCH with the target TCI state.

In this example, taking the mTRP including TRP1 and TRP2 as an example, if the TCI states pair from the two TRPs satisfies combination (1), that is, the TCI state from TRP1 is a known DL TCI state, and the TCI state from TRP2 is a known DL TCI state, the following applies.

For the terminal 101 that supports the above-mentioned advanced capability, after completing the activation corresponding to each TCI state, the terminal 101 may perform a data communication based on that TCI state. For example, in the first slot after *T* corresponding to a TRP, the terminal 101 performs a data communication with TRP1 based on the TCI state from TRP1. The data communication includes, for example, receiving, by the terminal 101, a PDSCH or PDCCH sent by the corresponding TRP.

For the terminal 101 that does not support the above-mentioned advanced capability, the maximum value of the activation delay may be determined, and the data communication may be performed based on two TCI states after the maximum value. For example, in the first slot after $slot \left\{n+{T}_{HARQ}+3{N}_{slot}^{subframe , μ}+max\left({TO}_{k}∗\left({T}_{first - SSB 1}+{T}_{SSB - proc}\right),{TO}_{k}∗\left({T}_{first - SSB 2}+\right.\right.\right.$ $\left.\left.{T}_{SSB - proc}\right)\right) / \left.NR slot length\right\}$, the terminal 101 performs a data communication with TRP1 based on the TCI state from TRP1, and the terminal 101 performs a data communication with TRP2 based on the TCI state from TRP2. The data communication includes, for example, receiving, by the terminal 101, a PDSCH or PDCCH sent by the corresponding TRP.

T_{first-SSB1} represents a time to transmit the first SSB from TRP1 after an MAC CE is decoded by the terminal 101, and T_{first-SSB2} represents a time to transmit the first SSB from TRP2 after the MAC CE is decoded by the terminal 101. The SSB is the QCL-TypeA or QCL-TypeC to the target TCI state.

In a second example, the activation delay corresponding to any TRP in the at least one TRP is determined according to a processing time for the indication information, a processing time for a DL RS and a beam measurement time, where the TCI state is a DL TCI state of an unknown type.

Optionally, when the TCI state is an unknown DL TCI state, the terminal 101 performs beam measurements such as L1-RSRP measurements during the activation process.

Optionally, the activation delay *T* satisfies: $\begin{matrix}T = n + {T}_{HARQ} + {3 N}_{slot}^{subframe , μ} + \left({T}_{L 1 - RSRP}+{TO}_{uk}∗\left({T}_{first - SSB}+{T}_{SSB - proc}\right)\right) / \\ NR slot length ;\end{matrix}$
where n represents a time for receiving the indication information, T_{HARQ} represents a time between the indication information and corresponding confirmation feedback information, T_{L1-RSRP} represents a time for an L1-RSRP measurement in beam measurements, T_{first-SSB} represents a duration between the time for receiving the indication information and a time for sending a first DL RS by the any TRP, T_{SSB-proc} is a processing time for the DL RS, and $3 {N}_{slot}^{subframe , μ}$ and TOᵤₖ are constants.

Optionally, regarding the meaning of the parameters, reference may also be made to the description of the above example.

In this example, also taking the mTRP including TRP1 and TRP2 as an example, if the TCI states pair from the two TRPs satisfies combination (2), that is, the TCI state from TRP1 is a known DL TCI state, and the TCI state from TRP2 is an unknown DL TCI state, the following applies.

For the terminal 101 that supports the above-mentioned advanced capability, after completing the activation corresponding to each TCI state, the terminal 101 may perform a data communication based on that TCI state. For example, in the first slot after $slot \left\{n+{T}_{HARQ}+{3 N}_{slot}^{subframe , μ}+\left({TO}_{k}∗\left({T}_{first - SSB 1}+{T}_{SSB - proc}\right)/NR slot length\right.\right\}$ , the terminal 101 performs a data communication with TRP1 based on the TCI state from TRP1, for example, receiving a PDSCH or PDCCH sent by TRP1. In the first slot after $slot \left\{n+{T}_{HARQ}\right. + 3 {N}_{slot}^{subframe , μ} +$ $\left.\left({T}_{L 1 - RSRP}+{TO}_{uk}∗\left({T}_{first - SSB 2}+{T}_{SSB - proc}\right)\right)/NR slot length\right\}$*,* the terminal 101 performs a data communication with TRP2 based on the TCI state from TRP2, for example, receiving a PDSCH or PDCCH sent by TRP2.

For the terminal 101 that does not support the above-mentioned advanced capability, the maximum value of the activation delay may be determined, and a data communication may be performed based on two TCI states after the maximum value. For example, in the first slot after $slot \left\{n+{T}_{HARQ}\right. + 3 {N}_{slot}^{subframe , μ} + max \left({TO}_{k}∗\left({T}_{first - SSB 1}+{T}_{SSB 1 - proc}\right), {T}_{L 1 - RSRP 2}+{TO}_{uk}∗\right.$ $\left(\left.{T}_{first - SSB 2}+{T}_{SSB - proc}\right)\right) / \left.NR slot length\right\}$*,* the terminal 101 performs a data communication with TRP1 based on the TCI state from TRP1, and the terminal 101 performs a data communication with TRP2 based on the TCI state from TRP2. The data communication includes, for example, receiving, by the terminal 101, a PDSCH or PDCCH sent by the corresponding TRP.

T_{first-SSB1} represents a time to transmit the first SSB from TRP1 after an MAC CE is decoded by the terminal 101, and T_{first-SSB2} represents a time to transmit the first SSB from TRP2 after the MAC CE is decoded by the terminal 101. The SSB is the QCL-TypeA or QCL-TypeC to the target TCI state.

T_{L1-RSRP2} is the time for a beam measurement in the frequency range FR2 for TRP2.

In a third example, the activation delay corresponding to any TRP in the at least one TRP is determined according to a processing time for the indication information, a processing time for a DL RS, and a UL path loss measurement time, where the TCI state is a UL TCI state of a known type.

Optionally, when the TCI state is a known UL TCI state, the terminal 101 performs an uplink path loss measurement during the activation process, for example, measuring a path loss reference signal (PL-RS).

Optionally, the activation delay *T* satisfies: $T = n + {T}_{HARQ} + {3 N}_{slot}^{subframe , μ} + NM ∗ \left(\begin{matrix}{T}_{first - target - PL - RS} + 4 ∗ \\ {T}_{target - PL - RS} + 2 ms\end{matrix}\right) / NR slot length ;$
where n represents a time for receiving the indication information, T_{HARQ} represents a time between the indication information and corresponding confirmation feedback information, T_{first-target-PL-RS} represents a duration between the time for receiving the indication information and a time for receiving a first DL RS used for an UL path loss measurement, T_{target-PL-RS} represents a period for the DL RS, and $3 {N}_{slot}^{subframe , μ}$ and *NM* are constants.

Optionally, the RS used for the path loss measurement is sent by a TRP corresponding to the activation delay.

Optionally, regarding the meaning of the parameters, reference may also be made to the description of the above examples.

Optionally, the occasion of applying different TCI states may be determined based on the capability of the terminal 101 and the TCI states combined with the known UL TCI state.

In a fourth example, the activation delay corresponding to any TRP in the at least one TRP is determined according to a processing time for the indication information, a processing time for a DL RS, a UL path loss measurement time, and a beam measurement time, where the TCI state is a UL TCI state of an unknown type.

Optionally, when the TCI state is an unknown UL TCI state, the terminal 101 performs an uplink path loss measurement and a beam measurement during the activation process.

Optionally, the activation delay T satisfies: $T = n + {T}_{HARQ} + {3 N}_{slot}^{subframe , μ} + \left(\begin{matrix}{T}_{L 1 - RSRP} + {T}_{first - target - PL - RS} + 4 ∗ \\ {T}_{target - PL - RS} + 2 ms\end{matrix}\right) / NR slot length ;$
where n represents a time for receiving the indication information, T_{HARQ} represents a time between the indication information and corresponding confirmation feedback information, T_{L1-RSRP} represents a time for an L1-RSRP measurement in beam measurements, T_{first-target-PL-RS} represents a duration between the time for receiving the indication information and a time for receiving a first DL RS used for an UL path loss measurement, T_{target-PL-RS} represents a period for the DL RS, and $3 {N}_{slot}^{subframe , μ}$ is a constant.

Optionally, regarding the meaning of the parameters, reference may also be made to the description of the above examples.

In this example, also taking the mTRP including TRP1 and TRP2 as an example, if the TCI states pair from the two TRPs satisfies combination (3), that is, the TCI state from TRP1 is an unknown UL TCI state, and the TCI state from TRP2 is a known UL TCI state, the following applies.

For the terminal 101 that supports the above-mentioned advanced capability, after completing the activation corresponding to each TCI state, the terminal 101 may perform a data communication based on that TCI state. For example, in the $slot \left\{n+{T}_{HARQ}+{3 N}_{slot}^{subframe , μ}+\right.$ $NM ∗ \left({T}_{first - target - PL - RS}+4∗{T}_{target - PL - RS}+2ms\right) / \left.NR slot length\right\}$, the terminal 101 sends an uplink channel or signal to TRP1 based on the target TCI state from TRP1. In the $slot \left\{n+{T}_{HARQ}\right. + {3 N}_{slot}^{subframe , μ} + \left({T}_{L 1 - RSRP}+{T}_{first - target - PL - RS}+4∗{T}_{target - PL - RS}+2ms\right) /$ $\left.NR slot length\right\}$*,* the terminal 101 sends an uplink channel or signal to TRP2 based on the target TCI state from TRP2.

For the terminal 101 that does not support the above-mentioned advanced capability, the maximum value of the activation delay may be determined, and a data communication may be performed based on two TCI states after the maximum value. For example, in the $slot \left\{n+{T}_{HARQ}\right. + {3 N}_{slot}^{subframe , μ} + max \left(NM∗\left({T}_{first - target - PL - RS}+4∗{T}_{target - PL - RS}+2mn\right.\right) ,$ $\left.{T}_{L 1 - RSRP}+{T}_{first - target - PL - RS}+4∗{T}_{target - PL - RS}+2ms\right) / \left.NR slot length\right\}$, the terminal 101 performs a data communication with TRP1 based on the TCI state from TRP1, and the terminal 101 performs a data communication with TRP2 based on the TCI state from TRP2. The data communication includes, for example, sending, by the terminal 101, an uplink channel or signal to the corresponding TRP, e.g., sending, by the terminal 101, a PUSCH or a PUCCH.

Optionally, the above determination manners may be applied to separate UL TCI state switching or joint TCI state switching of a PUCCH or PUSCH, or semi-persistent, aperiodic or periodic sounding reference signal (SRS). When the parameter *beamCorrespondenceWithoutUL-BeamSweeping* is configured to 1, *n* may be a slot in which a PDSCH carrying the MAC CE is received in the serving cell.

In some embodiments, after the terminal receives the indication information, the TCI state applied before the indication information (i.e., the old TCI state) may continue to be applied before a time *t,* where *t* satisfies:
$t = n + {T}_{HARQ} + 3 {N}_{slot}^{subframe , μ} ;$
where *n* represents a time for receiving the indication information, T_{HARQ} represents a time between the indication information and corresponding confirmation feedback information, and ${3 N}_{slot}^{subframe , μ}$ is a constant.

Optionally, applying the old TCI state includes, for example, receiving a PDSCH or PDCCH with the old TCI state, or sending a PUSCH or PUCCH with the old TCI state.

At step S2104, the terminal 101 and the network device 102 perform a communication based on the activated TCI state.

Optionally, the activated TCI state is the above-mentioned target TCI state.

Optionally, performing the data communication based on the TCI state is the above-mentioned application of the TCI state.

In some embodiments, after the network device 102 indicates the activated TCI state via the indication information, the terminal 101 may apply the activated TCI state after completing the activation of the TCI state within the corresponding activation delay.

Optionally, the behavior of the terminal during the application occasion includes one of: receiving a PDCCH or a PDSCH according to the TCI state activated, or sending a PUSCH according to the TCI state activated.

Optionally, depending on the target TCI state, different capabilities of the terminal may allow for different starting points for receiving the PDCCH or PDSCH.

Optionally, regarding the above-described behavior of the terminal, reference may be made to the description of the relevant embodiments in step S2103, which will not be repeated here.

In some embodiments, the multiple TRPs include a first TRP and a second TRP, and step S2104 includes: performing, by the terminal 101, a data communication with the first TRP according to the TCI state activated during a first time period excluding a second time period.

The first time period is a time period between a completion of an activation of the TCI state from the first TRP and a completion of an activation of the TCI state from the second TRP, and the second time period is a time period during which an RS appears during an activation process of the TCI state from the second TRP.

The terminal supports the capability of applying the corresponding TCI state after the activation of the TCI state from any TRP in multiple TRPs is completed.

Optionally, referring to FIG. 2b or FIG. 2c, the first time period may be T2 to T3.

Optionally, in conjunction with the description of the foregoing embodiments, the activation process of the TCI state from the second TRP may include an SSB-based time-frequency tracking, an L1-RSRP measurement, or a PL-RS-based path loss measurement. Thus, the RS used in the activation process of the TCI state from the second TRP includes, but is not limited to, an SSB or channel-state-information reference signal (CSI-RS) used for a tracking or measurement.

Optionally, if there is a time domain conflict with the above-mentioned RS during the time period of T2 to T3, the terminal 101 does not expect to be scheduled by the network device 102.

In some embodiments, the second time period includes one of: a time-domain unit where the RS is located during the activation process of the TCI state from the second TRP, where an RTD is less than or equal to a CP, and the RTD is a delay between an RS for the activation of the TCI state from the first TRP and an RS for the activation of the TCI state from the second TRP; or the time-domain unit and a time-domain unit before or after the time-domain unit, where an RTD is greater than a CP.

Optionally, the time-domain unit may be a slot, a symbol, a millisecond, or the like.

Optionally, taking the time-domain unit being a symbol as an example, if RTD ≤ CP, the second time period includes an orthogonal frequency division multiplexing (OFDM) symbol where the RS is located. For example, during the time period of T2 to T3, the terminal 101 does not expect to be scheduled on an SSB used for a time-frequency tracking or L1-RSRP measurement or an OFDM symbol for a PL-RS used for path loss calculation.

Optionally, taking the time-domain unit being a symbol as an example, if RTD > CP, the second time period includes an OFDM symbol where the RS is located, as well as one symbol before and after that OFDM symbol. For example, during the time period of T2 to T3, the terminal 101 does not expect to be scheduled at the following locations: on an SSB used for a time-frequency tracking or L1-RSRP measurement or on an OFDM symbol for a PL-RS used for path loss calculation, and on one OFDM symbol before or before that OFDM symbol.

In some embodiments, the names of information and the like are not limited to the names described in the embodiments. Terms such as "information," "message," "signal," "signaling," "report," "configuration," "indication," "instruction," "command," "channel," "parameter," "domain," and "field" may be used interchangeably.

In some embodiments, "acquiring," "obtaining," "getting," "receiving," "transmitting," "bidirectional transmission," and "sending and/or receiving" may be used interchangeably, and may be interpreted as receiving from other entities, obtaining from protocols, obtaining from higher layers, obtaining by self-processing, autonomously implementing, or other meanings.

In some embodiments, terms such as "sending," "emitting," "reporting," "issuing," "transmitting," "bidirectional transmission," and "sending and/or receiving" may be used interchangeably.

In some embodiments, terms such as "radio", "wireless", "radio access network (RAN)", "access network (AN)", and "RAN-based" may be used interchangeably.

In some embodiments, terms such as "moment," "point in time," "time," and "time location" may be used interchangeably, and terms such as "duration," "time period," "time window," "window," and "time" may be used interchangeably.

In some embodiments, the terms "component carrier (CC)," "cell," "frequency carrier," and "carrier frequency" may be used interchangeably.

In some embodiments, terms such as "certain," "preset," "predetermined," "set," "indicated," "particular," "any," and "first" may be used interchangeably. "A certain A," "a preset A," "a predetermined A," "a set A," "an indicated A," "a particular A," "any A," and "a first A" may be interpreted as A predefined in a protocol or the like, or as A obtained by setting, configuration, indication or the like, or as a specific A, a certain A, any A, a first A or the like, but are not limited thereto.

In some embodiments, determining or judging may be performed by a value represented by 1 bit (0 or 1), or by a true or false value (boolean), or by a comparison of numerical values (e.g., a comparison with a predetermined value), but is not limited thereto.

In some embodiments, "not expecting to receive" may be interpreted as not receiving on time domain resources and/or frequency domain resources, or as not performing subsequent processing on data after receiving it; and "not expecting to send" may be interpreted as not sending, or as sending but not expecting a receiver to respond to the sent content.

The method involved in the embodiments of the present disclosure may include at least one of steps S2101 to S2104, for example, the method includes steps S2102 to S2103.

In some embodiments, at least one of steps S2101 and S2104 may be optional, and one or more of these steps may be omitted or substituted in different embodiments.

In some embodiments, the order of steps S2101 and S2102 may be interchanged or performed simultaneously.

In some embodiments, reference may be made to other optional implementations described before or after the specification corresponding to FIG. 2a.

FIG. 3a is a schematic diagram illustrating a method for transmitting indication information according to an embodiment of the present disclosure. As shown in FIG. 3a, embodiments of the present disclosure relate to a method for transmitting indication information performed by the terminal 101, and the above method includes the following steps.

At step S3101, capability information is sent.

In some embodiments, regarding an optional implementation of step S3101, reference may be made to an optional implementation of step S2101 in FIG. 2a, which will not be repeated here.

In some embodiments, the terminal 101 sends the capability information to the network device 102, but not limited thereto; and the terminal 101 may also send the capability information to other entities.

At step S3102, indication information is obtained.

In some embodiments, regarding an optional implementation of step S3102, reference may be made to an optional implementation of step S2102 in FIG. 2a, which will not be repeated here.

In some embodiments, the terminal 101 may obtain the indication information from the network device 102, but not limited thereto; and the terminal 101 may also obtain the indication information from other entities.

At step S3103, the application occasion of the activated TCI state is determined according to the capability of the terminal.

In some embodiments, regarding an optional implementation of step S3103, reference may be made to an optional implementation of step S2103 in FIG. 2a, which will not be repeated here.

At step S3104, a communication is performed based on the activated TCI state.

In some embodiments, regarding an optional implementation of step S3104, reference may be made to an optional implementation of step S2104 in FIG. 2a, which will not be repeated here.

The method involved in the embodiments of the present disclosure may include at least one of steps S3101 to S3104, for example, the method includes steps S3102 to S3103.

In some embodiments, at least one of steps S3101 and S3104 may be optional, and one or more of these steps may be omitted or substituted in different embodiments.

In some embodiments, the order of steps S3101 and S3102 may be interchanged or performed simultaneously.

In some embodiments, reference may be made to other optional implementations described before or after the specification corresponding to FIG. 3a.

FIG. 3b is a schematic diagram illustrating a method for transmitting indication information according to an embodiment of the present disclosure. As shown in FIG. 3b, embodiments of the present disclosure relate to a method for transmitting indication information performed by the terminal 101, and the above method includes the following steps.

At step S3201, capability information is sent.

In some embodiments, regarding an optional implementation of step S3201, reference may be made to an optional implementation of step S2101 in FIG. 2a, which will not be repeated here.

At step S3202, indication information is obtained.

In some embodiments, regarding an optional implementation of step S3202, reference may be made to an optional implementation of step S2102 in FIG. 2a, which will not be repeated here.

At step S3203, the application occasion of the activated TCI state is determined according to the capability of the terminal.

In some embodiments, regarding an optional implementation of step S3203, reference may be made to an optional implementation of step S2103 in FIG. 2a, which will not be repeated here.

In some embodiments, reference may be made to other optional implementations described before or after the specification corresponding to FIG. 3b.

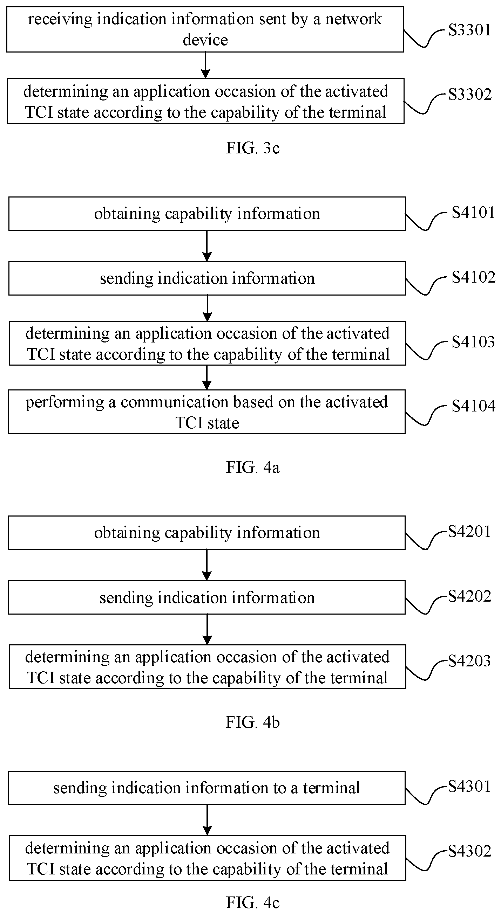

FIG. 3c is a schematic diagram illustrating a method for transmitting indication information according to an embodiment of the present disclosure. As shown in FIG. 3c, embodiments of the present disclosure relate to a method for transmitting indication information performed by the terminal 101, and the above method includes the following steps.

At step S3301, indication information sent by the network device 102 is received.

In some embodiments, regarding an optional implementation of step S3301, reference may be made to an optional implementation of step S2202 in FIG. 2a, which will not be repeated here.

The network device 102 includes multiple TRPs, and the indication information indicates that a TCI state from at least one TRP is activated.

At step S3302, an application occasion of the activated TCI state is determined according to the capability of the terminal.

In some embodiments, regarding an optional implementation of step S3302, reference may be made to an optional implementation of step S2103 in FIG. 2a, which will not be repeated here.

In some embodiments, step S3302 includes one of: determining the application occasion of the TCI state from each TRP in the at least one TRP according to an activation delay corresponding to the TRP, where the terminal supports a capability of performing a data communication according to the corresponding TCI state after an activation of the TCI state from any TRP in the multiple TRPs is completed; or determining the application occasion of the TCI state from the at least one TRP according to a maximum value of activation delays corresponding to the at least one TRP, where the terminal does not support a capability of performing a data communication according to the corresponding TCI state after an activation of the TCI state from any TRP in the multiple TRPs is completed.

In some embodiments, the activation delay corresponding to any TRP in the at least one TRP is determined according to a processing time for the indication information and a processing time for a DL RS, where the TCI state is a DL TCI state of a known type.

Optionally, the activation delay T satisfies:
$T = n + {T}_{HARQ} + 3 {N}_{slot}^{subframe , μ} + {TO}_{k} ∗ \left({T}_{first - SSB}+{T}_{SSB - proc}\right) / NR slot length ;$
where n represents a time for receiving the indication information, T_{HARQ} represents a time between the indication information and corresponding confirmation feedback information, T_{first-SSB} represents a duration between the time for receiving the indication information and a time for sending a first DL RS by the any TRP, T_{SSB-proc} is a processing time for the DL RS, and ${3 N}_{slot}^{subframe , μ}$ and TOₖ are constants.

In some embodiments, the activation delay corresponding to any TRP in the at least one TRP is determined according to a processing time for the indication information, a processing time for a DL RS and a beam measurement time, where the TCI state is a DL TCI state of an unknown type.

Optionally, the activation delay T satisfies:
$\begin{matrix}T = n + {T}_{HARQ} + {3 N}_{slot}^{subframe , μ} + \left({T}_{L 1 - RSRP}+{TO}_{uk}∗\left({T}_{first - SSB}+{T}_{SSB - proc}\right)\right) / \\ NR slot length ;\end{matrix}$
where n represents a time for receiving the indication information, T_{HARQ} represents a time between the indication information and corresponding confirmation feedback information, T_{L1-RSRP} represents a time for an L1-RSRP measurement in beam measurements, T_{first-SSB} represents a duration between the time for receiving the indication information and a time for sending a first DL RS by the any TRP, T_{SSB-proc} is a processing time for the DL RS, and ${3 N}_{slot}^{subframe , μ}$ and TOᵤₖ are constants.

In some embodiments, the activation delay corresponding to any TRP in the at least one TRP is determined according to a processing time for the indication information, a processing time for a DL RS, and a UL path loss measurement time, where the TCI state is a UL TCI state of a known type.

Optionally, the activation delay T satisfies: $T = n + {T}_{HARQ} + 3 {N}_{slot}^{subframe , μ} + NM ∗ \left(\begin{matrix}{T}_{first - target - PL - RS} + 4 ∗ \\ {T}_{targe - PL - RS} + 2 ms\end{matrix}\right) / NR slot length ;$
where n represents a time for receiving the indication information, T_{HARQ} represents a time between the indication information and corresponding confirmation feedback information, T_{first-target-PL-RS} represents a duration between the time for receiving the indication information and a time for receiving a first DL RS used for an UL path loss measurement, T_{target-PL-RS} represents a period for the DL RS, and ${3 N}_{slot}^{subframe , μ}$ and *NM* are constants.

In some embodiments, the activation delay corresponding to any TRP in the at least one TRP is determined according to a processing time for the indication information, a processing time for a DL RS, a UL path loss measurement time, and a beam measurement time, where the TCI state is a UL TCI state of an unknown type.

Optionally, the activation delay *T* satisfies: $T = n + {T}_{HARQ} + 3 {N}_{slot}^{subframe , μ} + \left(\begin{matrix}{T}_{L 1 - RSRP} + {T}_{first - target - PL - RS} + 4 ∗ \\ {T}_{target - PL - RS} + 2 ms\end{matrix}\right) / NR slot length ;$
where *n* represents a time for receiving the indication information, T_{HARQ} represents a time between the indication information and corresponding confirmation feedback information, T_{L1-RSRP} represents a time for an L1-RSRP measurement in beam measurements, T_{first-target-PL-RS} represents a duration between the time for receiving the indication information and a time for receiving a first DL RS used for an UL path loss measurement, T_{target-PL-RS} represents a period for the DL RS, and $3 {N}_{slot}^{subframe , μ}$ is a constant.

In some embodiments, after the terminal receives the indication information, the TCI state applied before the indication information continues to be applied before a time *t*, where *t* satisfies:
$t = n + {T}_{HARQ} + 3 {N}_{slot}^{subframe , μ} ;$
where *n* represents a time for receiving the indication information, T_{HARQ} represents a time between the indication information and corresponding confirmation feedback information, and $3 {N}_{slot}^{subframe , μ}$ is a constant.

In some embodiments, the multiple TRPs include a first TRP and a second TRP, and the method further includes: performing, by the terminal, a data communication with the first TRP according to the TCI state activated during a first time period excluding a second time period, where the first time period is a time period between a completion of an activation of the TCI state from the first TRP and a completion of an activation of the TCI state from the second TRP, and the second time period is a time period during which an RS appears during an activation process of the TCI state from the second TRP, where the terminal supports a capability of performing the data communication according to the corresponding TCI state after an activation of the TCI state from any TRP in the multiple TRPs is completed.

Optionally, the second time period includes one of: a time-domain unit where the RS is located during the activation process of the TCI state from the second TRP, where an RTD is less than or equal to a CP, and the RTD is a delay between an RS for an activation of the TCI state from the first TRP and an RS for an activation of the TCI state from the second TRP; or the time-domain unit and a time-domain unit before or after the time-domain unit, where an RTD is greater than a CP.

In some embodiments, a behavior of the terminal during the application occasion includes one of: receiving a PDCCH or a PDSCH according to the TCI state activated, or sending a PUSCH according to the TCI state activated.

In some embodiments, the method further includes: sending, by the terminal, capability information to the network device, where the capability information indicates the capability of the terminal.

In some embodiments, reference may be made to other optional implementations described before or after the specification corresponding to FIG. 3c.

FIG. 4a is a schematic diagram illustrating a method for transmitting indication information according to an embodiment of the present disclosure. As shown in FIG. 4a, embodiments of the present disclosure relate to a method for transmitting indication information performed by the network device 102, and the above method includes the following steps.

At step S4101, capability information is obtained.

In some embodiments, regarding an optional implementation of step S4101, reference may be made to an optional implementation of step S2101 in FIG. 2a, which will not be repeated here.

In some embodiments, the network device 102 may obtain the capability information from the terminal 101, but not limited thereto; and the network device 102 may also obtain the capability information from other entities.

At step S4102, indication information is sent.

In some embodiments, regarding an optional implementation of step S4102, reference may be made to an optional implementation of step S2102 in FIG. 2a, which will not be repeated here.

In some embodiments, the network device 102 may send the indication information to the terminal 101, but not limited thereto; and the network device 102 may also send the indication information to other entities.

At step S4103, the application occasion of the activated TCI state is determined according to the capability of the terminal.

In some embodiments, regarding an optional implementation of step S4103, reference may be made to an optional implementation of step S2103 in FIG. 2a, which will not be repeated here.

At step S4104, a communication is performed based on the activated TCI state.

In some embodiments, regarding an optional implementation of step S4104, reference may be made to an optional implementation of step S2104 in FIG. 2a, which will not be repeated here.

The method involved in the embodiments of the present disclosure may include at least one of steps S4101 to S4104, for example, the method includes steps S4102 to S4103.

In some embodiments, at least one of steps S4101 and S4104 may be optional, and one or more of these steps may be omitted or substituted in different embodiments.

In some embodiments, the order of steps S4101 and S4102 may be interchanged or performed simultaneously.

In some embodiments, reference may be made to other optional implementations described before or after the specification corresponding to FIG. 4a.

FIG. 4b is a schematic diagram illustrating a method for transmitting indication information according to an embodiment of the present disclosure. As shown in FIG. 4b, embodiments of the present disclosure relate to a method for transmitting indication information performed by the network device 102, and the above method includes the following steps.

At step S4201, capability information is obtained.

In some embodiments, regarding an optional implementation of step S4101, reference may be made to an optional implementation of step S2101 in FIG. 2a, which will not be repeated here.

At step S4202, indication information is sent.

In some embodiments, regarding an optional implementation of step S4202, reference may be made to an optional implementation of step S2102 in FIG. 2a, which will not be repeated here.

At step S4203, the application occasion of the activated TCI state is determined according to the capability of the terminal.

In some embodiments, regarding an optional implementation of step S4203, reference may be made to an optional implementation of step S2103 in FIG. 2a, which will not be repeated here.

In some embodiments, reference may be made to other optional implementations described before or after the specification corresponding to FIG. 4b.

FIG. 4c is a schematic diagram illustrating a method for transmitting indication information according to an embodiment of the present disclosure. As shown in FIG. 4c, embodiments of the present disclosure relate to a method for transmitting indication information performed by the network device 102, and the above method includes the following steps.

At step S4301, indication information is sent to the terminal 101.

In some embodiments, regarding an optional implementation of step S4301, reference may be made to an optional implementation of step S2202 in FIG. 2a, which will not be repeated here.

The network device includes multiple TRPs, and the indication information indicates that a TCI state from at least one TRP is activated.

At step S4302, an application occasion of the activated TCI state is determined according to the capability of the terminal.

In some embodiments, regarding an optional implementation of step S4302, reference may be made to an optional implementation of step S2103 in FIG. 2a, which will not be repeated here.

In some embodiments, step S4302 includes one of: determining the application occasion of the TCI state from each TRP in the at least one TRP according to an activation delay corresponding to the TRP, where the terminal supports a capability of performing a data communication according to the corresponding TCI state after an activation of the TCI state from any TRP in the multiple TRPs is completed; or determining the application occasion of the TCI state from the at least one TRP according to a maximum value of activation delays corresponding to the at least one TRP, where the terminal does not support a capability of performing a data communication according to the corresponding TCI state after an activation of the TCI state from any TRP in the multiple TRPs is completed.

In some embodiments, the activation delay corresponding to any TRP in the at least one TRP is determined according to a processing time for the indication information and a processing time for a DL RS, where the TCI state is a DL TCI state of a known type.

Optionally, the activation delay T satisfies:
$T = n + {T}_{HARQ} + 3 {N}_{slot}^{subframe , μ} + {TO}_{k} ∗ \left({T}_{first - SSB}+{T}_{SSB - proc}\right) / NR slot length ;$
where n represents a time for receiving the indication information, T_{HARQ} represents a time between the indication information and corresponding confirmation feedback information, T_{first-SSB} represents a duration between the time for receiving the indication information and a time for sending a first DL RS by the any TRP, T_{SSB-proc} is a processing time for the DL RS, and $3 {N}_{slot}^{subframe , μ}$ and TOₖ are constants.

In some embodiments, the activation delay corresponding to any TRP in the at least one TRP is determined according to a processing time for the indication information, a processing time for a DL RS and a beam measurement time, where the TCI state is a DL TCI state of an unknown type.

Optionally, the activation delay T satisfies: $\begin{matrix}T = n + {T}_{HARQ} + 3 {N}_{slot}^{subframe , μ} + \left({T}_{L 1 - RSRP}+{TO}_{uk}∗\left({T}_{first - SSB}+{T}_{SSB - proc}\right)\right) / \\ NR slot length ;\end{matrix}$
where *n* represents a time for receiving the indication information, T_{HARQ} represents a time between the indication information and corresponding confirmation feedback information, T_{L1-RSRP} represents a time for an L1-RSRP measurement in beam measurements, T_{first-SSB} represents a duration between the time for receiving the indication information and a time for sending a first DL RS by the any TRP, T_{SSB-proc} is a processing time for the DL RS, and $3 {N}_{slot}^{subframe , μ}$ and TOᵤₖ are constants.

In some embodiments, the activation delay corresponding to any TRP in the at least one TRP is determined according to a processing time for the indication information, a processing time for a DL RS, and a UL path loss measurement time, where the TCI state is a UL TCI state of a known type.

Optionally, the activation delay *T* satisfies: $T = n + {T}_{HARQ} + 3 {N}_{slot}^{subframe , μ} + NM ∗ \left(\begin{matrix}{T}_{first - target - PL - RS} + 4 ∗ \\ {T}_{target - PL - RS} + 2 ms\end{matrix}\right) / NR slot length ;$
where *n* represents a time for receiving the indication information, T_{HARQ} represents a time between the indication information and corresponding confirmation feedback information, T_{first-target-PL-RS} represents a duration between the time for receiving the indication information and a time for receiving a first DL RS used for an UL path loss measurement, T_{target-PL-RS} represents a period for the DL RS, and $3 {N}_{slot}^{subframe , μ}$ and *NM* are constants.

In some embodiments, the activation delay corresponding to any TRP in the at least one TRP is determined according to a processing time for the indication information, a processing time for a DL RS, a UL path loss measurement time, and a beam measurement time, where the TCI state is a UL TCI state of an unknown type.

Optionally, the activation delay T satisfies: $T = n + {T}_{HARQ} + 3 {N}_{slot}^{subframe , μ} + \left(\begin{matrix}{T}_{L 1 - RSRP} + {T}_{first - target - PL - RS} + 4 ∗ \\ {T}_{target - PL - RS} + 2 ms\end{matrix}\right) / NR slot length ;$
where *n* represents a time for receiving the indication information, T_{HARQ} represents a time between the indication information and corresponding confirmation feedback information, T_{L1-RSRP} represents a time for an L1-RSRP measurement in beam measurements, T_{first-target-PL-RS} represents a duration between the time for receiving the indication information and a time for receiving a first DL RS used for an UL path loss measurement, T_{target-PL-RS} represents a period for the DL RS, and $3 {N}_{slot}^{subframe , μ}$ is a constant.

In some embodiments, after the terminal receives the indication information, the TCI state applied before the indication information continues to be applied before a time *t*, where *t* satisfies:
$t = n + {T}_{HARQ} + 3 {N}_{slot}^{subframe , μ} ;$
where *n* represents a time for receiving the indication information, T_{HARQ} represents a time between the indication information and corresponding confirmation feedback information, and $3 {N}_{slot}^{subframe , μ}$ is a constant.

In some embodiments, the multiple TRPs include a first TRP and a second TRP, and the method further includes: performing, by the first TRP, a data communication with the terminal according to the TCI state activated during a first time period excluding a second time period, where the first time period is a time period between a completion of an activation of the TCI state from the first TRP and a completion of an activation of the TCI state from the second TRP, and the second time period is a time period during which an RS appears during an activation process of the TCI state from the second TRP, where the terminal supports a capability of performing the data communication according to the corresponding TCI state after an activation of the TCI state from any TRP in the multiple TRPs is completed.

Optionally, the second time period includes one of: a time-domain unit where the RS is located during the activation process of the TCI state from the second TRP, where an RTD is less than or equal to a CP, and the RTD is a delay between an RS for an activation of the TCI state from the first TRP and an RS for an activation of the TCI state from the second TRP; or the time-domain unit and a time-domain unit before or after the time-domain unit, where an RTD is greater than a CP.

In some embodiments, a behavior of the network device during the application occasion includes one of: sending a PDCCH or a PDSCH according to the TCI state activated, or receiving a PUSCH according to the TCI state activated.

In some embodiments, the method further includes: receiving, by the network device, capability information sent by the terminal, where the capability information indicates the capability of the terminal.

In some embodiments, reference may be made to other optional implementations described before or after the specification corresponding to FIG. 4c.

In the method in the present disclosure, UE capability and behavior for unified TCI state activation in an mTRP scenario are defined. To facilitate the understanding of the embodiments of the present disclosure, some embodiments are listed below.

### Embodiment 1

### Single piece of downlink control information (sDCI)

The meaning of sDCI is to activate multiple TCI states using a single piece of information or signaling. For example, for the unified TCI activation in the mTRP, in one MAC CE, two TCI states will be activated.

In Embodiment 1, the following known condition is defined for each TCI state, which may include the following examples.

### Example 1

The DL TCI state is known if the following conditions are met.
(1) Within the defined time period, the following conditions are met.

A DL TCI state activation or switching command (such as indication information) is received within 1280 ms upon the last transmission of the RS resource for a beam measurement.

The terminal 101 has sent at least one L1-RSRP report for the target DL TCI state before the indication information.

The target DL TCI state remains detectable during the DL TCI state activation or switching period.

An SSB associated with the DL TCI state remains detectable during the DL TCI state activation or switching period, where the SNR corresponding to the DL TCI state ≥ -3dB, and the SSB may be associated with either a PCI of a serving cell or a PCI different from the PCI of the serving cell.

The defined time period begins at the time for the last transmission of the RS resource used for the L1-RSRP measurement reporting for the target DL TCI state, and ends at the time for the completion of the activation of the DL TCI state, where the RS resource for the L1-RSRP measurement is an RS in the target DL TCI state or an RS QCLed with the target DL TCI state.

(2) If (1) is not met, the DL TCI state is unknown.

### Example 2

The UL TCI state is known if the following conditions are met.
(1) Within the defined time period, the following conditions are met.

A UL TCI state activation or switching command (such as indication information) is received within 1280 ms upon the last transmission of the RS resource for a beam measurement.

The terminal 101 has sent at least one L1-RSRP report for the target UL TCI state before the indication information.

The RS configured in the target UL TCI state remains detectable during the UL TCI state activation or switching period, where the SNR corresponding to the RS configured in the target UL TCI state ≥ -3dB.

The target UL TCI state remains detectable during the UL TCI state activation or switching period.

The SSB associated with the UL TCI state remains detectable during the UL TCI state activation or switching period, where the SNR corresponding to the UL TCI state ≥ -3dB, and the SSB may be associated with either a PCI of a serving cell or a PCI different from the PCI of the serving cell.

The defined time period begins at the time for the last transmission of the RS resource used for the L1-RSRP measurement reporting for the target UL TCI state, and ends at the time for the completion of the activation of the UL TCI state, where the RS resource for the L1-RSRP measurement is an RS in the target DL TCI state or an RS QCLed with the target DL TCI state.

(2) If (1) is not met, the UL TCI state is unknown.

### Example 3

Depending on the conditions of the known types described above, the TCI states pair configured by the network device 102 may have the following different combinations:
(1) a known TCI state and a known TCI state;
(2) a known TCI state and an unknown TCI state;
(3) an unknown TCI state and an unknown TCI state.

### Example 4

The activation completion time for two TCI states will be different in the mTRP scenario. For some UE, the UE can be scheduled with a PDSCH or a PDCCH/PUSCH with a new TCI state only after UE has completed the activation of both TCI states, as shown in FIG. 2c.

The UE receives an MAC CE command at T0. The activation of the TCI state from TRP1 will be completed until T2 and the activation of the TCI state from TRP2 will be completed until T3. In this example, the UE can be scheduled with PDSCH1 with a new TCI state from TRP1 or PDSCH2 with a new TCI state from TRP2 until T3.

### Example 5

For some other UE with a more advanced implementation capability, the UE can be scheduled with a PDSCH or a PDCCH/PUSCH with a new TCI state if one of the TCI state activations has been completed, as shown in FIG. 2b.

Referring to the description in FIG. 2c, in this example, the activation of the TCI state from TRP1 will be completed until T2 and the activation of the TCI state from TRP2 will be completed until T3. In this example, the UE can be scheduled with PDSCH1 with a new TCI state from TRP1 from T2. In this way, the UE can receive data earlier and improve the system capacity.

Optionally, in conjunction with Example 5, a UE capability for the TCI states activation delay in the mTRP is introduced.

Optionally, for the UE without an advanced capability, the total activation delay of two TCI states will be the maximum delay between activation delays of the two TCI states, as in Example 4.

### Example 6

Taking the activation of combination (1) of a known TCI state from TRP1 and a known DL TCI state from TRP2 as an example, upon receiving a PDSCH carrying an MAC-CE activation command in slot *n,* the UE shall be able to perform a TCI state switching at the first slot after the following slot on these two TRPs, and receive UE-dedicated PDCCHs/PDSCHs from two TRPs with target TCI states on which TCI state switching occurs at the first slot that is after $slot \left\{n+{T}_{HARQ}+3{N}_{slot}^{subframe , μ}+max\left({TO}_{k}∗\left({T}_{first - SSB 1}+{T}_{SSB - proc}\right),{TO}_{k}∗\left({T}_{first - SSB 2}+\right.\right.\right.$ $\left.\left.\left.{T}_{SSB - proc}\right)\right)/NR slot length\right\}$*.*

The UE shall be able to receive a UE-dedicated PDCCH/PDSCH with the old TCI state until slot $\left(n+{T}_{HARQ}+3{N}_{slot}^{subframe , μ}\right)$, where T_{HARQ} represents a time between DL data and corresponding confirmation feedback information; T_{first-SSB1} represents a time to transmit the first SSB from TRP1 after an MAC CE is decoded by the terminal 101, and the SSB is the QCL-TypeA or QCL-TypeC to the target TCI state; T_{first-SSB2} represents a time to transmit the first SSB from TRP2 after the MAC CE is decoded by the terminal 101, and the SSB is the QCL-TypeA or QCL-TypeC to the target TCI state; T_{SSB-proc} = 2 ms; and TOₖ = 1 if the target TCI state is not in the active TCI state list corresponding to a downlink channel, otherwise, TOₖ = 0.

### Example 7

Taking the activation of combination (2) of a known TCI state from TRP1 and an unknown DL TCI state from TRP2 as an example, upon receiving a PDSCH carrying an MAC-CE activation command in slot n, the UE shall be able to perform a TCI state switching at the first slot after the following slot on these two TRPs, and receive UE-dedicated PDCCHs/PDSCHs from two TRPs with target TCI states on which TCI state switching occurs at the first slot that is after $slot \left\{n+{T}_{HARQ}+3{N}_{slot}^{subframe , μ}+max\left({TO}_{k}∗\left({T}_{first - SSB 1}+{T}_{SSB - proc}\right),{T}_{L 1 - RSRP 2}+{TO}_{uk}∗\right.\right.$ $\left.\left.\left({T}_{first - SSB 2}+{T}_{SSB - proc}\right)\right)/NR slot length\right\}$.

The UE shall be able to receive a UE-dedicated PDCCH/PDSCH with the old TCI state until slot $\left(n+{T}_{HARQ}+3{N}_{slot}^{subframe , μ}\right)$, where T_{HARQ} represents a time between DL data and corresponding confirmation feedback information; T_{first-SSB1} represents a time to transmit the first SSB from TRP1 after an MAC CE is decoded by the terminal 101, and the SSB is the QCL-TypeA or QCL-TypeC to the target TCI state; T_{first-SSB2} represents a time to transmit the first SSB from TRP2 after the MAC CE is decoded by the terminal 101, and the SSB is the QCL-TypeA or QCL-TypeC to the target TCI state; T_{L1-RSRP2} is the time for a beam measurement in the frequency range FR2 for TRP2; T_{SSB-proc} = 2 ms; and TOₖ = 1 if the target TCI state is not in the active TCI state list corresponding to a downlink channel, otherwise, TOₖ = 0.

### Example 8

Taking the activation of combination (3) of a known UL TCI state from TRP1 and an unknown UL TCI state from TRP2 as an example, for separate UL TCI state switching or joint TCI state switching of a PUCCH or PUSCH, or semi-persistent, aperiodic or periodic SRS, when the parameter *beamCorrespondenceWithoutUL-BeamSweeping* is configured to 1, upon receiving a PDSCH carrying the MAC CE in slot *n* on the serving cell, the UE shall be able to send an uplink signal with the target TCI state in the following $slot \left\{n+{T}_{HARQ}+3{N}_{slot}^{subframe , μ}+\right.$ $max \left(NM∗\left({T}_{first - target - PL - RS}+4∗{T}_{target - PL - RS}+2ms\right),\right. {T}_{L 1 - RSRP} + {T}_{first - target - PL - RS} +$ $\left.\left.4∗{T}_{target - PL - RS}+2ms\right)/NR slot length\right\}$.

### Example 9

For a UE with an advanced capability, the activation delays of two TCI states can be decided by each TCI state activation itself, as shown in Examples 10 to 12.

### Example 10

Taking the activation of combination (1) of a known TCI state from TRP1 and a known DL TCI state from TRP2 as an example, upon receiving a PDSCH carrying an MAC-CE activation command in slot *n,* the UE shall be able to perform a TCI state switching at the first slot after the following slot on each TRP, and receive UE-dedicated PDCCHs/PDSCHs from each TRP with a target TCI state on which TCI state switching occurs at the first slot that is after $slot \left\{n+{T}_{HARQ}+3{N}_{slot}^{subframe , μ}+{TO}_{k}∗\left({T}_{first - SSB}+{T}_{SSB - proc}\right)/NR slot length\right\}$ .

The UE shall be able to receive a UE-dedicated PDCCH/PDSCH with the old TCI state until slot $\left(n+{T}_{HARQ}+3{N}_{slot}^{subframe , μ}\right)$, where T_{HARQ} represents a time between DL data and corresponding confirmation feedback information; T_{first-SSB} represents a time to transmit the first SSB after an MAC CE is decoded by the terminal 101, and the SSB is the QCL-TypeA or QCL-TypeC to the target TCI state; T_{SSB-proc} = 2 ms; and TOₖ = 1 if the target TCI state is not in the active TCI state list corresponding to a downlink channel, otherwise, TOₖ = 0.

### Example 11

Taking the activation of combination (2) of a known TCI state from TRP1 and an unknown DL TCI state from TRP2 as an example, for TRP1, upon receiving a PDSCH carrying an MAC-CE activation command in slot *n,* the UE shall be able to perform a TCI state switching at the first slot after the following slot, and receive UE-dedicated PDCCHs/PDSCHs from TRP1 with target TCI states on which TCI state switching occurs at the first slot that is after $slot \left\{n+{T}_{HARQ}+3{N}_{slot}^{subframe , μ}+{TO}_{k}∗\left({T}_{first - SSB 1}+{T}_{SSB - proc}\right)/NR slot length\right\}$ ; and the UE shall be able to receive a UE-dedicated PDCCH/PDSCH with the old TCI state until slot $\left(n+{T}_{HARQ}+3{N}_{slot}^{subframe , μ}\right)$ .

For TRP2, upon receiving a PDSCH carrying an MAC-CE activation command in slot *n,* the UE shall be able to perform a TCI state switching at the first slot after the following slot, and receive UE-dedicated PDCCHs/PDSCHs from TRP1 with target TCI states on which TCI state switching occurs at the first slot that is after $slot \left\{n+{T}_{HARQ}+3{N}_{slot}^{subframe , μ}+\left({T}_{L 1 - RSRP}+\right.\right.$ ${TO}_{uk} ∗ \left.\left.\left({T}_{first - SSB 2}+{T}_{SSB - proc}\right)\right)/NR slot length\right\} ;$; and the UE shall be able to receive a UE-dedicated PDCCH/PDSCH with the old TCI state until slot $\left(n+{T}_{HARQ}+3{N}_{slot}^{subframe , μ}\right)$.

T_{HARQ} represents a time between DL data and corresponding confirmation feedback information; T_{first-SSB} represents a time to transmit the first SSB from TRP1 after an MAC CE is decoded by the terminal 101, and the SSB is the QCL-TypeA or QCL-TypeC to the target TCI state; T_{L1-RSRP} is the time for a beam measurement in the frequency range FR2 for TRP2; T_{SSB-proc} = 2 ms; and TOₖ = 1 if the target TCI state is not in the active TCI state list corresponding to a downlink channel, otherwise, TOₖ = 0.

### Example 12

Taking the activation of combination (3) of a known UL TCI state from TRP1 and an unknown UL TCI state from TRP2 as an example, for separate UL TCI state switching or joint TCI state switching of a PUCCH or PUSCH, or semi-persistent, aperiodic or periodic SRS, when the parameter *beamCorrespondenceWithoutUL-BeamSweeping* is configured to 1, upon receiving a PDSCH carrying the MAC CE in slot *n* on the serving cell, for TRP1, the UE shall be able to send an uplink signal with the target TCI state in the following slot $\left\{n+{T}_{HARQ}+\right.$ $3 {N}_{slot}^{subframe , μ} + NM ∗ \left({T}_{first - target - PL - RS}+4∗{T}_{target - PL - RS}+2ms\right) / NR slot \left.length\right\}$; and for TRP2, the UE shall be able to send an uplink signal with the target TCI state in the following slot $\left\{n+{T}_{HARQ}+3{N}_{slot}^{subframe , μ}+\left({T}_{L 1 - RSRP}+{T}_{first - target - PL - RS}+4∗{T}_{target - PL - RS}+2ms\right)/\right.$ $\left.NR slot length\right\}$*.*

### Example 13

With the introduced capability of the UE, when the UE completes one TCI activation from TRP1, the UE can be scheduled with a PDSCH from TRP1. However, since the UE will continue to perform TCI activation of TRP2 until T3, during the period of T2 to T3, the UE may perform an SSB based T/F tracking, an L1-RSRP measurement or a PL-RS measurement for path loss. UE cannot be scheduled with data when overlapping with these RSs.

Optionally, the following scheduling restriction is needed before the UE completes two TCI activations.

The UE is not expected to transmit a PUCCH/PUSCH/SRS or receive a PDCCH/PDSCH/CSI-RS for tracking/CSI-RS for channel quality indication (CQI) on the concerned OFDM symbols before the UE completes both TCI state activations, where the concerned OFDM symbols are: the same and 1 OFDM symbol before or after the OFDM symbols corresponding to the SSB used for T/F tracking or L1-RSRP measurement or PL-RS used for path loss calculation, if the UE supports *capability of measurement with RTD>CP;* or the same OFDM symbols corresponding to the SSB used for T/F tracking or L1-RSRP measurement or PL-RS used for path loss calculation, if the UE does not support *capability of measurement with RTD>CP.*

### Embodiment 2

### Multiple pieces of downlink control information (mDCI)

The meaning of the mDCI is to activate multiple TCI states using multiple pieces of information or signaling. For example, for the unified TCI activation in the mTRP, two MAC CEs will trigger two TCI state activations separately.

Optionally, referring to Embodiment 1, with the advanced capability of the UE, the UE can receive a PDSCH with a new TCI state when any one of the TCI state activations is completed. Otherwise, the total TCI activation delay will be the maximum value between two TCI state activations.

Optionally, even with the advanced capability of the UE, the scheduling restriction is still needed.

For example, the UE is not expected to transmit a PUCCH/PUSCH/SRS or receive a PDCCH/PDSCH/CSI-RS for tracking/CSI-RS for CQI on the concerned OFDM symbols before the UE completes both TCI state activations, where the concerned OFDM symbols are: the same and 1 OFDM symbol before or after the OFDM symbols corresponding to the SSB used for T/F tracking or L1-RSRP measurement or PL-RS used for path loss calculation, if the UE supports *capability of measurement with RTD>CP;* or the same OFDM symbols corresponding to the SSB used for T/F tracking or L1-RSRP measurement or PL-RS used for path loss calculation, if the UE does not support *capability of measurement with RTD>CP.*

The embodiments of the present disclosure further provide a device for implementing any one of the above methods. For example, a device is provided, which includes units or modules for implementing steps performed by the terminal in any one of the above methods. For another example, another device is provided, which includes units or modules for implementing steps performed by a network device (such as an access network device, a core network functional node, a core network device, or the like) in any one of the above methods.

It should be understood that the division of the units or modules in the above device is only a logical functional division. In actual implementation, the units or modules may be fully or partially integrated into a physical entity, or may be physically separated. Furthermore, the units or modules in the device may be implemented in the form of calling software by a processor, for example, the device includes a processor, the processor is connected to a memory, the memory has stored therein instructions, and the processor calls the instructions stored in the memory to implement any one of the above methods or to implement the functions of the units or modules of the above device. The processor is, for example, a general-purpose processor, such as a central processing unit (CPU) or a microprocessor, and the memory is either internal to the device or external to the device. Alternatively, the units or modules in the device may be implemented in the form of hardware circuits. The functions of some or all of the units or modules may be achieved by designing the hardware circuits. The above-mentioned hardware circuits may be understood as one or more processors. For example, in an implementation, the above-mentioned hardware circuit is an application-specific integrated circuit (ASIC). The functions of some or all of the above-mentioned units or modules are achieved by designing the logical relationships between the components within the circuit. As another example, in another implementation, the above-mentioned hardware circuit may be implemented by a programmable logic device (PLD). Taking a field programmable gate array (FPGA) as an example, it may include a large number of logic gates. The connection relationships between the logic gates are configured via configuration files, thereby achieving the functions of some or all of the above-mentioned units or modules. All units or modules of the above device may be implemented entirely in the form of calling software by the processor, or entirely by hardware circuits, or partially in the form of calling software by the processor and the rest by hardware circuits.

In the embodiments of the present disclosure, the processor is a circuit with signal processing functions. In an implementation, the processor may be a circuit with instruction reading and running functions, such as a CPU, a microprocessor, a graphics processing unit (GPU) (which may be understood as a microprocessor), or a digital signal processor (DSP). In another implementation, the processor may implement certain functions by means of the logical relationship of hardware circuits. The logical relationship of the above-mentioned hardware circuits is fixed or reconfigurable. For example, the processor is a hardware circuit implemented by an ASIC or a PLD, such as an FPGA. In a reconfigurable hardware circuit, the process of loading, by the processor, a configuration document to implement the hardware circuit configuration may be understood as the process of loading, by the processor, instructions to implement the functions of some or all of the above units or modules. In addition, the processor is may also be a hardware circuit designed for artificial intelligence, which may be understood as ASIC, such as a neural network processing unit (NPU), a tensor processing unit (TPU), a deep learning processing unit (DPU), or the like.

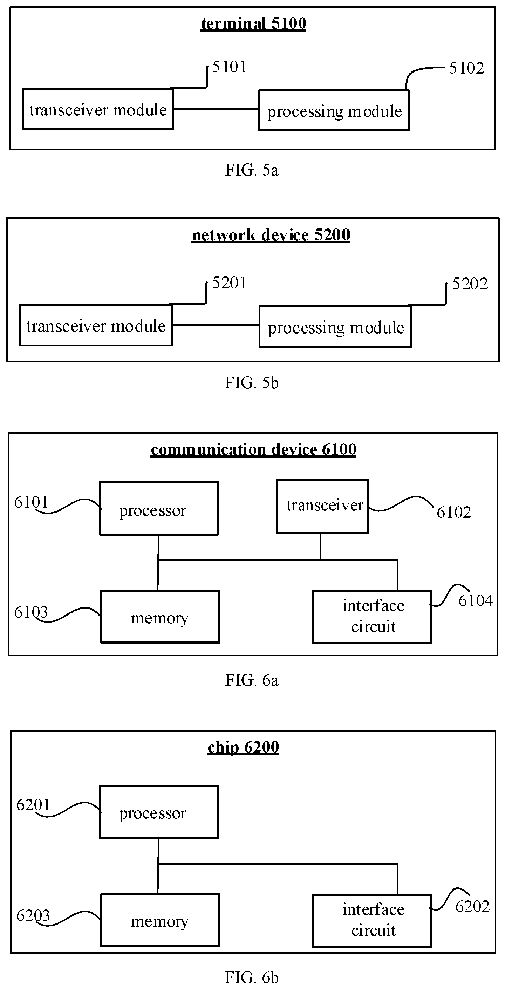

FIG. 5a is a schematic block diagram of a terminal provided according to an embodiment of the present disclosure. As shown in FIG. 5a, the terminal 5100 may include at least one of a transceiver module 5101, a processing module 5102, or the like. In some embodiments, the transceiver module 5101 is configured to receive indication information sent by a network device, where the network device includes multiple TRPs, and the indication information indicates that a TCI state from at least one TRP is activated. The processing module 5102 is configured to determine an application occasion of the TCI state activated according to a capability of the terminal.

Optionally, the transceiver module 5101 is configured to perform at least one of the communication steps such as sending and/or receiving steps performed by the terminal 101 in any of the above methods, which will not be elaborated here. Optionally, the processing module 5102 is configured to perform at least one of the other steps performed by the terminal 101 in any of the above methods, which will not be elaborated here.

FIG. 5b is a schematic block diagram of a terminal provided according to an embodiment of the present disclosure. As shown in FIG. 5b, the network device 5200 may include at least one of a transceiver module 5201, a processing module 5202, or the like. In some embodiments, the transceiver module 5201 is configured to send indication information to a terminal, where the network device includes multiple TRPs, and the indication information indicates that a TCI state from at least one TRP is activated. The processing module 5202 is configured to determine an application occasion of the TCI state activated according to a capability of the terminal.

Optionally, the transceiver module 5201 is configured to perform at least one of the communication steps such as sending and/or receiving steps performed by the network device 102 in any of the above methods, which will not be elaborated here. Optionally, the processing module 5202 is configured to perform at least one of the other steps performed by the network device 102 in any of the above methods, which will not be elaborated here.

In some embodiments, the transceiver module may include a sending module and/or a receiving module, and the sending module and the receiving module may be separate or integrated together. Optionally, the transceiver module may be interchanged with the transceiver.

In some embodiments, the processing module may be a single module or may include multiple sub-modules. Optionally, the sub-modules may each execute all or some of the steps to be performed by the processing module. Optionally, the processing module may be interchanged with the processor.

FIG. 6a is a schematic block diagram of a communication device 6100 provided according to an embodiment of the present disclosure. The communication device 6100 may be a network device (such as an access network device, a core network device, or the like), a terminal (such as a user equipment, or the like), a chip, chip system, or processor that supports a network device to implement any one of the above methods, or a chip, chip system, or processor that supports a terminal to implement any one of the above methods. The communication device 6100 may be configured to implement the methods as described in the above-mentioned method embodiments. For details, reference may be made to the description in the above-mentioned method embodiments.

As shown in FIG. 6a, the communication device 6100 includes one or more processors 6101. The processor 6101 may be a general-purpose processor, a special-purpose processor, or the like. The processor 6101 may be, for example, a baseband processor or a central processor. The baseband processor may be configured to process a communication protocol and communication data, and the central processor may be configured to control a communication device (such as a base station, a baseband chip, a terminal, a terminal chip, a distributed unit (DU), a centralized unit (CU), or the like), execute a program, and process data of the program. Optionally, the communication device 6100 is configured to perform any one of the above methods. Optionally, one or more processors 6101 may invoke instructions to cause the communication device 6100 to perform any one of the above methods.

In some embodiments, the communication device 6100 further includes one or more transceivers 6102. When the communication device 6100 includes one or more transceivers 6102, at least one of the communication steps such as sending and/or receiving steps in the above methods is performed by the transceiver 6102, and at least one of the other steps is performed by the processor 6101. In an optional embodiment, the transceiver may include a receiver and/or a transmitter, and the receiver and the transmitter may be separate or integrated. Optionally, terms such as transceiver, transceiver unit, transceiver device, transceiver circuit, interface circuit and interface may be used interchangeably; terms such as transmitter, transmitter unit, transmitter device, and transmitter circuit may be used interchangeably; and terms such as receiver, receiver unit, receiver device, and receiver circuit may be used interchangeably.

In some embodiments, the communication device 6100 further includes one or more memories 6103 for storing data. Optionally, all or some of the memories 6103 may also be located outside the communication device 6100. In an optional embodiment, the communication device 6100 may include one or more interface circuits 6104. Optionally, the interface circuits 6104 are connected to the memory 6102. The interface circuits 6104 may be configured to receive data from the memory 6102 or other devices, and may be configured to send data to the memory 6102 or other devices. For example, the interface circuits 6104 may read data stored in the memory 6102 and send the data to the processor 6101.

The communication device 6100 described in the above embodiments may be a network device or a terminal, but the scope of the communication device 6100 described in the present disclosure is not limited thereto, and the structure of the communication device 6100 may not be limited to FIG. 6a. The communication device 6100 may be an independent device or part of a larger device. For example, the communication device 6100 may be (1) a stand-alone integrated circuit (IC), or a chip, or a chip system or subsystem; (2) a set of one or more ICs, in which optionally, the set of ICs may further include a storage component for storing data and programs; (3) an ASIC, such as a modem; (4) a module that may be embedded in other devices; (5) a receiver, a terminal, an intelligent terminal, a cellular phone, a wireless device, a handheld device, a mobile unit, an in-vehicle device, a network device, a cloud device, an artificial intelligence device, or the like; or (6) others.

FIG. 6b is a schematic block diagram of a chip 6200 provided according to an embodiment of the present disclosure. For the case where the communication device 6100 may be a chip or a chip system, reference may be made to the block diagram of the chip 6200 shown in FIG. 6b, but the present disclosure is not limited thereto.

The chip 6200 includes one or more processors 6201, and the chip 6200 is configured to perform any one of the above methods.

In some embodiments, the chip 6200 further includes one or more interface circuits 6202. Optionally, terms such as interface circuit, interface, and transceiver pin may be used interchangeably. In some embodiments, the chip 6200 further includes one or more memories 6203 for storing data. Optionally, all or some of the memories 6203 may be located outside the chip 6200. Optionally, the interface circuits 6202 may be configured to receive data from the memory 6203 or other devices, and may be configured to send data to the memory 6203 or other devices. For example, the interface circuits 6202 may read data stored in the memory 6203 and send the data to the processor 6201.

In some embodiments, at least one of the communication steps such as sending and/or receiving steps in the above methods is performed by the interface circuits 6202. For example, performing, by the interface circuits 6202, the communication steps such as sending and/or receiving steps in the above methods refers to performing, by the interface circuits 6202, data interaction between the processor 6201, the chip 6200, and the memory 6203 or the transceiver device. In some embodiments, at least one of the other steps is performed by the processor 6201.

The modules and/or devices described in the various embodiments of virtual devices, physical devices, chips, and the like may be combined or separated arbitrarily as needed. Optionally, some or all of the steps may be performed collaboratively by multiple modules and/or devices, without limitations here.

The present disclosure further provides a storage medium, which has stored therein instructions that, when executed on the communication device 6100, cause the communication device 6100 to perform any one of the above methods. Optionally, the above-mentioned storage medium is an electronic storage medium. Optionally, the above-mentioned storage medium is a computer-readable storage medium, but is not limited thereto; and the above-mentioned storage medium may also be a storage medium readable by other devices. Optionally, the above storage medium may be a non-transitory storage medium, but is not limited thereto; and the above-mentioned storage medium may also be a transitory storage medium.

The present disclosure further provides a program product that, when executed by the communication device 6100, causes the communication device 6100 to perform any one of the above methods. Optionally, the above-mentioned program product is a computer program product.

The present disclosure further provides a computer program that, when executed on a computer, causes the computer to perform functions of any one of the above-mentioned method embodiments.

### Industrial applicability

The terminal obtains a TCI state to be activated in the mTRP scenario according to the indication information sent by the network device, so as to activate the TCI state. For the activated TCI state, the terminal adaptively determines an occasion when to apply the TCI state based on its own capability. Thus, when the activation completion time for multiple TCI states is different, the terminal may apply the corresponding TCI state at the appropriate occasion.

## Claims

1. A method for transmitting indication information, comprising:
receiving, by a terminal, the indication information sent by a network device, wherein the network device comprises multiple transmission reception points (TRPs), and the indication information indicates that a transmission configuration indicator (TCI) state from at least one TRP is activated; and
determining an application occasion of the TCI state activated according to a capability of the terminal.

2. The method according to claim 1, wherein determining the application occasion of the TCI state activated according to the capability of the terminal comprises:
determining the application occasion of the TCI state from each TRP in the at least one TRP according to an activation delay corresponding to the TRP, wherein the terminal supports a capability of performing a data communication according to the corresponding TCI state after an activation of the TCI state from any TRP in the multiple TRPs is completed; or
determining the application occasion of the TCI state from the at least one TRP according to a maximum value of activation delays corresponding to the at least one TRP, wherein the terminal does not support a capability of performing a data communication according to the corresponding TCI state after an activation of the TCI state from any TRP in the multiple TRPs is completed.

3. The method according to claim 2, wherein
the activation delay corresponding to any TRP in the at least one TRP is determined according to a processing time for the indication information and a processing time for a downlink (DL) reference signal (RS), wherein the TCI state is a DL TCI state of a known type.

4. The method according to claim 3, wherein the activation delay T satisfies: $T = n + {T}_{HARQ} + 3 {N}_{slot}^{subframe , μ} + {TO}_{k} ∗ \left({T}_{first - SSB}+{T}_{SSB - proc}\right) / NR slot length ;$ where n represents a time for receiving the indication information, T_{HARQ} represents a time between the indication information and corresponding confirmation feedback information, T_{first-SSB} represents a duration between the time for receiving the indication information and a time for sending a first DL RS by the any TRP, T_{SSB-proc} is a processing time for the DL RS, and $3 {N}_{slot}^{subframe , μ}$ and TOₖ are constants.

5. The method according to claim 2, wherein
the activation delay corresponding to any TRP in the at least one TRP is determined according to a processing time for the indication information, a processing time for a DL RS and a beam measurement time, wherein the TCI state is a DL TCI state of an unknown type.

6. The method according to claim 5, wherein the activation delay T satisfies: $T = n + {T}_{HARQ} + 3 {N}_{slot}^{subframe , μ} + \left({T}_{L 1 - RSRP}+{TO}_{uk}∗\left({T}_{first - SSB}+{T}_{SSB - proc}\right)\right) / NR slot length ;$ where n represents a time for receiving the indication information, T_{HARQ} represents a time between the indication information and corresponding confirmation feedback information, T_{L1-RSRP} represents a time for a layer 1 reference signal received power (L1-RSRP) measurement in beam measurements, T_{first-SSB} represents a duration between the time for receiving the indication information and a time for sending a first DL RS by the any TRP, T_{SSB-proc} is a processing time for the DL RS, and $3 {N}_{slot}^{subframe , μ}$ and TOᵤₖ are constants.

7. The method according to claim 2, wherein
the activation delay corresponding to any TRP in the at least one TRP is determined according to a processing time for the indication information, a processing time for a DL RS, and an uplink (UL) path loss measurement time, wherein the TCI state is a UL TCI state of a known type.

8. The method according to claim 7, wherein the activation delay T satisfies: $\begin{matrix}T = n + {T}_{HARQ} + 3 {N}_{slot}^{subframe , μ} + NM ∗ \left({T}_{first - target - PL - RS}+4∗{T}_{target - PL - RS}+2ms\right) / \\ NR slot length ;\end{matrix}$ where n represents a time for receiving the indication information, T_{HARQ} represents a time between the indication information and corresponding confirmation feedback information, T_{first-target-PL-RS} represents a duration between the time for receiving the indication information and a time for receiving a first DL RS used for an UL path loss measurement, T_{target-PL-RS} represents a period for the DL RS, and $3 {N}_{slot}^{subframe , μ}$ and *NM* are constants.

9. The method according to claim 2, wherein
the activation delay corresponding to any TRP in the at least one TRP is determined according to a processing time for the indication information, a processing time for a DL RS, a UL path loss measurement time, and a beam measurement time, wherein the TCI state is a UL TCI state of an unknown type.

10. The method according to claim 9, wherein the activation delay T satisfies: $\begin{matrix}T = n + {T}_{HARQ} + 3 {N}_{slot}^{subframe , μ} + \left({T}_{L 1 - RSRP}+{T}_{first - target - PL - RS}+4∗{T}_{target - PL - RS}+2ms\right) / \\ NR slot length ; \end{matrix}$ where n represents a time for receiving the indication information, T_{HARQ} represents a time between the indication information and corresponding confirmation feedback information, T_{L1-RSRP} represents a time for an L1-RSRP measurement in beam measurements, T_{first-target-PL-RS} represents a duration between the time for receiving the indication information and a time for receiving a first DL RS used for an UL path loss measurement, T_{target-PL-RS} represents a period for the DL RS, and ${3 N}_{slot}^{subframe , μ}$ is a constant.

11. The method according to any one of claims 2 to 10, wherein after the terminal receives the indication information, the TCI state applied before the indication information continues to be applied before a time *t,* where *t* satisfies: $t = n + {T}_{HARQ} + 3 {N}_{slot}^{subframe , μ} ;$ where n represents a time for receiving the indication information, T_{HARQ} represents a time between the indication information and corresponding confirmation feedback information, and ${3 N}_{slot}^{subframe , μ}$ is a constant.

12. The method according to any one of claims 2 to 10, wherein the multiple TRPs comprise a first TRP and a second TRP, and the method further comprises:
performing, by the terminal, a data communication with the first TRP according to the TCI state activated during a first time period excluding a second time period, where the first time period is a time period between a completion of an activation of the TCI state from the first TRP and a completion of an activation of the TCI state from the second TRP, and the second time period is a time period during which an RS appears during an activation process of the TCI state from the second TRP,
wherein the terminal supports a capability of performing the data communication according to the corresponding TCI state after an activation of the TCI state from any TRP in the multiple TRPs is completed.

13. The method according to claim 12, wherein the second time period comprises one of:
a time-domain unit where the RS is located during the activation process of the TCI state from the second TRP, wherein a round-trip-delay (RTD) is less than or equal to a cyclic prefix (CP), and the RTD is a delay between an RS for an activation of the TCI state from the first TRP and an RS for an activation of the TCI state from the second TRP; or
the time-domain unit and a time-domain unit before or after the time-domain unit, wherein an RTD is greater than a CP.

14. The method according to any one of claims 1 to 10, wherein a behavior of the terminal during the application occasion comprises one of:
receiving a physical downlink control channel (PDCCH) or a physical downlink shared channel (PDSCH) according to the TCI state activated; or
sending a physical uplink shared channel (PUSCH) according to the TCI state activated.

15. A method for transmitting indication information, comprising:
sending, by a network device, the indication information to a terminal, wherein the network device comprises multiple transmission reception points (TRPs), and the indication information indicates that a transmission configuration indicator (TCI) state from at least one TRP is activated; and
determining an application occasion of the TCI state activated according to a capability of the terminal.

16. The method according to claim 15, wherein determining the application occasion of the TCI state activated according to the capability of the terminal comprises:
determining the application occasion of the TCI state from each TRP in the at least one TRP according to an activation delay corresponding to the TRP, wherein the terminal supports a capability of performing a data communication according to the corresponding TCI state after an activation of the TCI state from any TRP in the multiple TRPs is completed; or
determining the application occasion of the TCI state from the at least one TRP according to a maximum value of activation delays corresponding to the at least one TRP, wherein the terminal does not support a capability of performing a data communication according to the corresponding TCI state after an activation of the TCI state from any TRP in the multiple TRPs is completed.

17. The method according to claim 16, wherein
the activation delay corresponding to any TRP in the at least one TRP is determined according to a processing time for the indication information and a processing time for a downlink (DL) reference signal (RS), wherein the TCI state is a DL TCI state of a known type.

18. The method according to claim 17, wherein the activation delay T satisfies: $t = n + {T}_{HARQ} + 3 {N}_{slot}^{subframe , μ} + {TO}_{k} ∗ \left({T}_{first - SSB}+{T}_{SSB - proc}\right) / NR slot length ;$ where n represents a time for receiving the indication information, T_{HARQ} represents a time between the indication information and corresponding confirmation feedback information, T_{first-SSB} represents a duration between the time for receiving the indication information and a time for sending a first DL RS by the any TRP, T_{SSB-proc} is a processing time for the DL RS, and ${3 N}_{slot}^{subframe , μ}$ and TOₖ are constants.

19. The method according to claim 16, wherein
the activation delay corresponding to any TRP in the at least one TRP is determined according to a processing time for the indication information, a processing time for a DL RS and a beam measurement time, wherein the TCI state is a DL TCI state of an unknown type.

20. The method according to claim 19, wherein the activation delay T satisfies: $T = n + {T}_{HARQ} + 3 {N}_{slot}^{subframe , μ} + \left({T}_{L 1 - RSRP}+{TO}_{uk}∗\left({T}_{first - SSB}+{T}_{SSB - proc}\right)\right) / NR slot length ;$ where n represents a time for receiving the indication information, T_{HARQ} represents a time between the indication information and corresponding confirmation feedback information, T_{L1-RSRP} represents a time for a layer 1 reference signal received power (L1-RSRP) measurement in beam measurements, T_{first-SSB} represents a duration between the time for receiving the indication information and a time for sending a first DL RS by the any TRP, T_{SSB-proc} is a processing time for the DL RS, and ${3 N}_{slot}^{subframe , μ}$ and TOᵤₖ are constants.

21. The method according to claim 16, wherein
the activation delay corresponding to any TRP in the at least one TRP is determined according to a processing time for the indication information, a processing time for a DL RS, and an uplink (UL) path loss measurement time, wherein the TCI state is a UL TCI state of a known type.

22. The method according to claim 21, wherein the activation delay T satisfies: $\begin{matrix}T = n + {T}_{HARQ} + 3 {N}_{slot}^{subframe , μ} + NM ∗ \left({T}_{first - target - PL - RS}+4∗{T}_{target - PL - RS}+2ms\right) / \\ NR slot length ;\end{matrix}$ where n represents a time for receiving the indication information, T_{HARQ} represents a time between the indication information and corresponding confirmation feedback information, T_{first-target-PL-RS} represents a duration between the time for receiving the indication information and a time for receiving a first DL RS used for an UL path loss measurement, T_{target-PL-RS} represents a period for the DL RS, and ${3 N}_{slot}^{subframe , μ}$ and *NM* are constants.

23. The method according to claim 16, wherein
the activation delay corresponding to any TRP in the at least one TRP is determined according to a processing time for the indication information, a processing time for a DL RS, a UL path loss measurement time, and a beam measurement time, wherein the TCI state is a UL TCI state of an unknown type.

24. The method according to claim 23, wherein the activation delay T satisfies: $\begin{matrix}T = n + {T}_{HARQ} + 3 {N}_{slot}^{subframe , μ} + \left({T}_{L 1 - RSRP}{+ T}_{first - target - PL - RS}+4∗{T}_{target - PL - RS}+2ms\right) / \\ NR slot length ;\end{matrix}$ where n represents a time for receiving the indication information, T_{HARQ} represents a time between the indication information and corresponding confirmation feedback information, T_{L1-RSRP} represents a time for an L1-RSRP measurement in beam measurements, T_{first-target-PL-RS} represents a duration between the time for receiving the indication information and a time for receiving a first DL RS used for an UL path loss measurement, T_{target-PL-RS} represents a period for the DL RS, and $3 {N}_{slot}^{subframe , μ}$ is a constant.

25. The method according to any one of claims 16 to 24, wherein after the terminal receives the indication information, the TCI state applied before the indication information continues to be applied before a time *t,* where *t* satisfies: $t = n + {T}_{HARQ} + 3 {N}_{slot}^{subframe , μ} ;$ where n represents a time for receiving the indication information, T_{HARQ} represents a time between the indication information and corresponding confirmation feedback information, and $3 {N}_{slot}^{subframe , μ}$ is a constant.

26. The method according to any one of claims 16 to 24, wherein the multiple TRPs comprise a first TRP and a second TRP, and the method further comprises:
performing, by the first TRP, a data communication with the terminal according to the TCI state activated during a first time period excluding a second time period, where the first time period is a time period between a completion of an activation of the TCI state from the first TRP and a completion of an activation of the TCI state from the second TRP, and the second time period is a time period during which an RS appears during an activation process of the TCI state from the second TRP,
wherein the terminal supports a capability of performing the data communication according to the corresponding TCI state after an activation of the TCI state from any TRP in the multiple TRPs is completed.

27. The method according to claim 26, wherein the second time period comprises one of:
a time-domain unit where the RS is located during the activation process of the TCI state from the second TRP, wherein a round-trip-delay (RTD) is less than or equal to a cyclic prefix (CP), and the RTD is a delay between an RS for the activation of the TCI state from the first TRP and an RS for the activation of the TCI state from the second TRP; or
the time-domain unit and a time-domain unit before or after the time-domain unit, wherein an RTD is greater than a CP.

28. The method according to any one of claims 15 to 24, wherein a behavior of the network device during the application occasion comprises one of:
sending a physical downlink control channel (PDCCH) or a physical downlink shared channel (PDSCH) according to the TCI state activated; or
receiving a physical uplink shared channel (PUSCH) according to the TCI state activated.

29. A terminal, comprising:
a transceiver module configured to receive indication information sent by a network device, wherein the network device comprises multiple transmission reception points (TRPs), and the indication information indicates that a transmission configuration indicator (TCI) state from at least one TRP is activated; and
a processing module configured to determine an application occasion of the TCI state activated according to a capability of the terminal.

30. A network device, comprising:
a transceiver module configured to send indication information to a terminal, wherein the network device comprises multiple transmission reception points (TRPs), and the indication information indicates that a transmission configuration indicator (TCI) state from at least one TRP is activated; and
a processing module configured to determine an application occasion of the TCI state activated according to a capability of the terminal.

31. A communication device, comprising:
one or more processors,
wherein the communication device is configured to perform the method according to any one of claims 1 to 14.

32. A communication device, comprising:
one or more processors,
wherein the communication device is configured to perform the method according to any one of claims 15 to 28.

33. A communication system, comprising:
a terminal configured to perform the method according to any one of claims 1 to 14; and
a network device configured to perform the method according to any one of claims 15 to 28.

34. A storage medium having stored therein instructions that, when run on a communication device, cause the communication device to perform the method according to any one of claims 1 to 14 or any one of claims 15 to 28.
